# EUROPÄISCHE PATENTSCHRIFT

(11) **EP 3 309 022 B1**
(45) Veröffentlichungstag und Bekanntmachung des Hinweises auf die Patenterteilung: **21.12.2022**
(21) Anmeldenummer: 17194114.9
(22) Anmeldetag: 29.09.2017
(51) Int. Cl.: B60T 7/14, B60T 7/12, B60L 3/02, B60L 3/08, F16D 59/00, B60T 17/22, B60T 13/66

(54) **STEUERUNG EINER BREMSANLAGE EINES SCHIENENFAHRZEUGS**
CONTROL OF A BRAKE SYSTEM OF A RAIL VEHICLE
COMMANDE D'UNE INSTALLATION DE FREINAGE D'UN VÉHICULE SUR RAILS

(30) Priorität: 30.09.2016 DE 102016118596
(43) Veröffentlichungstag der Anmeldung: 18.04.2018
(73) Patentinhaber: Bombardier Transportation GmbH, 10785 Berlin (DE)
(72) Erfinder: ZINGLER, Kai, 16727 Oberkrämer (DE); WEBER, Frank, 06536 Südharz OT Rottleberode (DE)
(74) Vertreter: Cohausz & Florack

(56) Entgegenhaltungen:
- EP-A1- 0 389 416
- WO-A1-2009/127597
- DE-A1-102012 105 160
- DE-A1-102012 215 588
- US-A- 3 700 886
- US-A- 5 785 392

## Beschreibung

### HINTERGRUND DER ERFINDUNG

Die vorliegende Erfindung betrifft ein Verfahren zur Steuerung einer Bremsanlage eines Schienenfahrzeugs, das durch einen Fahrzeugführer betrieben wird, bei dem der Fahrzeugführer über eine Fahrerüberwachung überwacht wird, wobei eine Inaktivität des Fahrzeugführers festgestellt wird, wenn innerhalb eines vorgebbaren Reaktionszeitraums nach einem Überwachungsereignis keine Reaktion des Fahrzeugführers erfasst wird, und bei Feststellen der Inaktivität des Fahrzeugführers eine Zwangsbremsung des Fahrzeugs erfolgt. Die Erfindung betrifft weiterhin eine entsprechende Bremsanlage sowie ein Schienenfahrzeug mit einer derartigen Bremsanlage.

Eine solche Fahrerüberwachung, wie sie beispielsweise aus der WO 2009/127597 A1 bekannt ist, erfolgt bei Schienenfahrzeugen typischerweise, um sicherzustellen, dass bei plötzlichem Ausfall des Fahrzeugführers (beispielsweise durch ein unvorhergesehenes akutes gesundheitliches Problem) eine fahrerlose Weiterfahrt des Fahrzeugs verhindert wird. Hierzu muss der Fahrzeugführer typischerweise in regelmäßigen, fest vorgegebenen Abständen innerhalb des fest vorgegebenen Reaktionszeitraums eine oder mehrere Betätigungshandlungen vornehmen (beispielsweise ein Eingabeelement betätigen), um dem System seine uneingeschränkte Verfügbarkeit zu signalisieren. Eine solche Fahrerüberwachung wird häufig auch als Sicherheitsfahrschaltung (Sifa) oder Totmannschaltung bezeichnet. Reagiert der Fahrzeugführer innerhalb des Reaktionszeitraums nicht wie vorgegeben, geht das System von einem Ausfall des Fahrzeugführers aus und leitet eine Zwangsbremsung des Fahrzeugs ein (typischerweise bis zum Stillstand).

Bei Befahren so genannter Steilstrecken in Talfahrt, bei denen das Gefälle eine vorgegebene Gefälleschwelle überschreitet, kann es bei Ausfall des Fahrzeugführers jedoch trotz dieser Fahrerüberwachung zu kritischen Situationen kommen. So kann es beispielsweise auf einer Strecke mit einem Gefälle von 55‰ bei nicht zeitgerechtem Abbremsen des Fahrzeugs durch den Fahrzeugführer, beispielsweise auf 50 km/h, dazu kommen, dass das Fahrzeug nicht mehr rechtzeitig vor Gefahrenstellen bremsbar ist, sodass es zu einer Entgleisung wegen zu hoher Geschwindigkeit bzw. einem Überfahren eines Halt zeigenden Signals kommt. Insbesondere kann es selbst bei aktiver Fahrerüberwachung dazu kommen, dass das Fahrzeug alleine infolge des Gefälles auf mehr als 80 km/h beschleunigt wird.

Um solche Situationen zu vermeiden, wird typischerweise seitens des Betreibers oder der zuständigen Aufsichtsbehörden gefordert, dass bei Steilstreckenfahrt neben dem Fahrzeugführer ein weiterer Fahrzeugbegleiter im Führerraum anwesend ist, um die Einsatzfähigkeit des Fahrzeugführers und das Einhalten einer vorgegebenen Maximalgeschwindigkeit für die Steilstreckenfahrt zu überwachen. Dies führt jedoch zu unerwünscht erhöhtem betrieblichem Aufwand und Ausfallzeiten bzw. Verspätungen, sofern kein geeigneter Fahrzeugbegleiter verfügbar ist.

### ZUSAMMENFASSUNG DER ERFINDUNG

Es ist daher eine Aufgabe der Erfindung, eine Verfahren zur Steuerung einer Bremsanlage eines Schienenfahrzeugs, eine entsprechende Bremsanlage sowie ein Schienenfahrzeug der eingangs genannten Art zur Verfügung zu stellen, welches bzw. welche die oben genannten Nachteile nicht oder zumindest zu einem geringeren Grad aufweist und insbesondere bei einfacher Gestaltung und reduziertem betrieblichem Aufwand ein sicheres Befahren von Steilstrecken ermöglicht.

Die vorliegende Erfindung löst diese Aufgabe ausgehend von den Merkmalen gemäß dem Oberbegriff des Anspruchs 1 durch die im kennzeichnenden Teil des Anspruchs 1 angegebenen Merkmale.

Die vorliegende Erfindung basiert auf der technischen Lehre, dass man bei einfacher Gestaltung und reduziertem betrieblichem Aufwand ein sicheres Befahren von Steilstrecken ermöglicht, wenn die Fahrerüberwachung eine Unterscheidung zwischen einer Normalstreckenfahrt und einer Steilstreckenfahrt vornimmt, für die Normalstreckenfahrt ein erster Reaktionszeitraum vorgegeben wird und für die Steilstreckenfahrt ein zweiter Reaktionszeitraum vorgegeben wird, der kleiner ist als der erste Reaktionszeitraum. Durch den verkürzten Reaktionszeitraum für die Steilstreckenfahrt kann in einfacher Weise auch ohne den zusätzlichen Fahrzeugbegleiter sichergestellt werden, dass bei Ausfall des Fahrzeugführers mit einer Zwangsbremsung reagiert wird, bevor aufgrund der zusätzlichen Beschleunigung durch das Gefälle überhaupt eine kritische Geschwindigkeitsschwelle überschritten werden kann.

Dabei kann der Reaktionszeitraum als fester Zeitraum vorgegeben sein, also eine rein zeitbezogene Überwachung erfolgen. Zusätzlich oder alternativ kann jedoch auch eine Kopplung an die zurückgelegte Fahrstrecke vorgesehen sein, mithin also eine distanzbezogene Überwachung erfolgen, die eine Reaktion nach Durchfahren einer vorgegebenen Fahrdistanz erfordert. In diesem Fall ist der jeweilige Reaktionszeitraum von der zurückgelegten Strecke (und mithin also auch von der aktuellen Fahrgeschwindigkeit) abhängig.

Der erste und zweite Reaktionszeitraum beziehen sich bei der distanzbezogenen Überwachung dann auf dieselbe Fahrgeschwindigkeit. Mit anderen Worten ergibt sich bei identischer Fahrgeschwindigkeit der erste Reaktionszeitraum aus einer vorgegebenen ersten Fahrdistanz, während sich der verkürzte zweite Reaktionszeitraum dann aus einer gegenüber der ersten Fahrdistanz verkürzten zweiten Fahrdistanz ergibt, innerhalb derer der Fahrer seine Verfügbarkeit signalisieren sollte.

Es versteht sich, dass beide Varianten (zeitbezogene bzw. distanzbezogene Überwachung) insbesondere jeweils alleine (nur zeitbezogene oder nur distanzbezogene Überwachung) oder überlagert (fester Zeitraum oder feste Fahrdistanz, je nachdem welches Kriterium eine frühere Reaktion erzwingt) zum Einsatz kommen können.

Gemäß einem Aspekt betrifft die vorliegende Erfindung daher Verfahren zur Steuerung einer Bremsanlage eines Schienenfahrzeugs, das durch einen Fahrzeugführer betrieben wird, bei dem der Fahrzeugführer über eine Fahrerüberwachung überwacht wird, wobei eine Inaktivität des Fahrzeugführers festgestellt wird, wenn innerhalb eines vorgebbaren Reaktionszeitraums nach einem Überwachungsereignis keine Reaktion des Fahrzeugführers erfasst wird, und bei Feststellen der Inaktivität des Fahrzeugführers eine Zwangsbremsung des Fahrzeugs erfolgt. Die Fahrerüberwachung nimmt eine Unterscheidung zwischen einer Normalstreckenfahrt und einer Steilstreckenfahrt vor, indem zwischen einem Normalstreckenmodus und einem Steilstreckenmodus umgeschaltet wird, wobei eine Steilstrecke bei Überschreiten einer vorgebbaren Gefälleschwelle für ein Gefälle einer befahrenen Strecke vorliegt. Dabei wird für die Normalstreckenfahrt ein erster Reaktionszeitraum vorgegeben, während für die Steilstreckenfahrt ein zweiter Reaktionszeitraum vorgegeben wird, der kleiner ist als der erste Reaktionszeitraum.

Der zweite Reaktionszeitraum kann dabei einen beliebigen geeigneten Wert aufweisen, der eine rechtzeitige Reaktion bei Ausfall des Fahrzeugführers währende einer Steilstreckenfahrt gewährleistet. Rechtzeitig ist die Reaktion dann, wenn bei einer maximal zulässigen Beladung des Fahrzeugs sichergestellt ist, dass bei einer Zwangsbremsung mit der maximal verfügbaren Bremsleistung keine Überschreitung einer Grenzgeschwindigkeit erfolgt, mit der ein sicheres Befahren des Streckenabschnitts gerade noch gewährleistet ist.

Bevorzugt sind daher für das Fahrzeug für zumindest einen Streckenabschnitt der befahrenen Strecke eine Nennbetriebsgeschwindigkeit und eine Grenzgeschwindigkeit vorgegeben. Dabei ist die Nennbetriebsgeschwindigkeit eine maximale Geschwindigkeit, mit der das Fahrzeug im Normalbetrieb in dem betreffenden Streckenabschnitt höchstens betrieben werden darf. Dabei kann für den Fahrzeugführer eine etwas (z. B. um 5 km/h) darunter liegende betriebliche Höchstgeschwindigkeit vorgegeben sein, an die er sich laut Betriebsvorschrift halten soll. Die Grenzgeschwindigkeit ist eine maximale Geschwindigkeit, mit der bei einer maximal zulässigen Beladung des Fahrzeugs ein sicheres Befahren des Streckenabschnitts noch gewährleistet ist. Der zweite Reaktionszeitraum ist dann bevorzugt derart gewählt, dass eine Ausgangsgeschwindigkeit, die das Fahrzeug mit der maximal zulässigen Beladung bei Inaktivität des Fahrzeugführers ausgehend von der Nennbetriebsgeschwindigkeit bedingt durch das Gefälle des Streckenabschnitts beim Einsetzen der Zwangsbremsung erreicht hat, unterhalb einer Geschwindigkeitsschwelle liegt, bei der trotz einer Zwangsbremsung mit einer maximalen Bremsleistung der Bremsanlage ein Überschreiten der Grenzgeschwindigkeit erfolgt.

Da mit dem Einsetzen der Zwangsbremsung typischerweise schon nach kurzer Zeit eine Verzögerung des Fahrzeugs erzielt wird, die größer ist als die Beschleunigung durch das Gefälle, kann die Geschwindigkeitsschwelle typischerweise etwa der Grenzgeschwindigkeit entsprechen bzw. nur knapp unter dieser Grenzgeschwindigkeit liegen (je nachdem, wie schnell mit der Bremsanlage eine Verzögerung des Fahrzeugs erzielt werden kann, die größer ist als die Beschleunigung des Fahrzeugs durch das Gefälle).

Bei bevorzugten Varianten mit rein zeitbezogener Überwachung (so genannte Zeit-Zeit-Sifa) beträgt der zweite Reaktionszeitraum 10 s bis 30 s, vorzugsweise 15 s bis 25 s, weiter vorzugsweise 15 s bis 20 s, da sich hiermit in den meisten Situationen eine rechtzeitige Zwangsbremsung bei Ausfall des Fahrzeugführers realisieren lässt, ohne den Fahrzeugführer durch zu häufige Quittierungshandlungen bzw. Betätigungshandlungen zu überlasten. Der tatsächlich gewählte Wert des zweiten Reaktionszeitraums richtet sich dabei natürlich nach dem maximalen Gefälle des Streckenabschnitts und ist umso kleiner, je größer das Gefälle ist. Zusätzlich oder alternativ kann der erste Reaktionszeitraum 25 s bis 60 s, vorzugsweise 25 s bis 35 s, weiter vorzugsweise 30 s bis 35 s, betragen. Hiermit werden bei Normalstreckenfahrt trotz hinreichender Sicherheit ausreichend lange Intervalle zwischen den Quittierungshandlungen bzw. Betätigungshandlungen des Fahrzeugführers erzielt.

Bei anderen Varianten mit distanzbezogener Überwachung (so genannte Weg-Weg-Sifa) ergibt sich der zweite Reaktionszeitraum dann aus einer zweiten Fahrdistanz von 300 m bis 800 m, vorzugsweise 450 m bis 700 m, weiter vorzugsweise 500 m bis 600 m, da sich hiermit in den meisten Situationen eine rechtzeitige Zwangsbremsung bei Ausfall des Fahrzeugführers realisieren lässt, ohne den Fahrzeugführer durch zu häufige Quittierungshandlungen bzw. Betätigungshandlungen zu überlasten. Zusätzlich oder alternativ kann sich der erste Reaktionszeitraum aus einer ersten Fahrdistanz von 500 m bis 1600 m, vorzugsweise 700 m bis 1000 m, weiter vorzugsweise 800 m bis 900 m, ergeben. Hiermit werden bei Normalstreckenfahrt trotz hinreichender Sicherheit ausreichend lange Intervalle zwischen den Quittierungshandlungen bzw. Betätigungshandlungen des Fahrzeugführers erzielt.

Als Quittierungshandlungen bzw. Betätigungshandlungen können grundsätzlich beliebige Handlungen des Fahrzeugführers dienen, welche auf seine Einsatzfähigkeit schließen lassen. Häufig muss der Fahrzeugführer ein Betätigungselement dauerhaft betätigen (beispielsweise ein Pedal oder einen Bedienknopf dauerhaft drücken) und dieses als Quittierungshandlung bzw. Betätigungshandlung für kurze Zeit loslassen sowie erneut betätigen. Die oben angegebenen ersten und zweiten Reaktionszeiträume bzw. ersten und zweiten Fahrdistanzen beziehen sich auf den Fall einer vollständig abgeschlossenen Quittierungshandlung bzw. Betätigungshandlung (d. h. beispielsweise ein kurzzeitiges Loslassen und erneutes Betätigen des Betätigungselements, z. B. des Pedals oder Bedienknopfes).

Für den Fall, dass die Quittierungshandlung bzw. Betätigungshandlung nicht vollständig abgeschlossen wird (beispielsweise das Betätigungselement zwar losgelassen aber nicht erneut betätigt wird), gelten in der Regel erheblich kürzere erste und zweite Reaktionszeiträume bzw. erste und zweite Fahrdistanzen. Die Fahrdistanz bis zum Bremseingriff liegt dann im Steilstreckenbetrieb bevorzugt bei 20 m bis 100 m, vorzugsweise 20 m bis 50 m, während die Fahrdistanz bis zum Bremseingriff im Normalbetrieb bevorzugt bei 50 m bis 200 m, vorzugsweise bei 50 m bis 100 m liegt. Vergleichbares gilt für die ersten und zweiten Reaktionszeiträume.

Die Gefälleschwelle, ab der eine Steilstreckenfahrt vorliegt, kann grundsätzlich in beliebiger geeigneter Weise definiert bzw. festgelegt werden. Insbesondere kann sie von der Art des Schienenfahrzeugs und/oder dessen zulässiger Maximalbeladung und/oder dessen maximaler Bremsleistung abhängen. Bei bestimmten Varianten beträgt die Gefälleschwelle 20‰, vorzugsweise 30‰, weiter vorzugsweise 40‰. Insbesondere können je nach Land bzw. geltenden Richtlinien unterschiedliche Gefälleschwellen vorgegeben sein. So gelten derzeit in Deutschland Strecken für Hauptbahnen mit einem maximalen Gefälle von mehr als 25%o als Steilstrecke, während bei Strecken für Nebenbahnen eine Gefälleschwelle von 40‰ definiert ist. Auch seitens des Betreibers des Schienenfahrzeugs kann eine entsprechende Vorgabe existieren. So gilt nach der Konzernrichtlinie RIL 465.0001 ("Betrieb auf Steilstrecken; Besondere Vorschriften über das Bremsen") der Deutsche Bahn AG, Frankfurt, DE, eine Gefälleschwelle von 40‰ für die Steilstrecke.

Das Umschalten von dem Normalmodus in den Steilstreckenmodus kann grundsätzlich zu einem beliebigen geeigneten Zeitpunkt vor, bei oder nach Einfahrt in einen Streckenabschnitt mit einer Steilstrecke erfolgen, solange sichergestellt ist, dass das Umschalten rechtzeitig erfolgt, bevor tatsächlich eine Steilstrecke befahren wird. Bei bestimmten Varianten erfolgt das Umschalten von dem Normalmodus in den Steilstreckenmodus vor Einfahrt in einen Streckenabschnitt mit einer Steilstrecke. Besonders einfach kann dies bei einem Halt des Fahrzeugs erfolgen, beispielsweise in einer Station oder vor einem Haltesignal.

Insbesondere kann das Umschalten von dem Normalmodus in den Steilstreckenmodus auf beliebige geeignete Weise ausgelöst werden. So kann das Umschalten alleine durch den Fahrzeugführer erfolgen. Ebenso kann sie automatisch erfolgen, indem seitens der Fahrzeugsteuerung erkannt wird, dass der vorausliegende Streckenabschnitt eine Steilstrecke umfasst. Besonders einfach kann eine Erkennung allein anhand der Erfassung eines Halts in der letzten Station und/oder dem letzten Haltesignal vor Einfahrt in einen Streckenabschnitt mit einer Steilstrecke erfolgen.

Bei bestimmten Varianten wird vor Einfahrt in einen Streckenabschnitt mit einer Steilstrecke, insbesondere bei einem letzten Halt vor Einfahrt in den Streckenabschnitt, ein Hinweis zum Umschalten von dem Normalmodus in den Steilstreckenmodus an den Fahrzeugführer ausgegeben. Dieser kann dann das Umschalten auslösen. Dabei kann vorgesehen sein, dass eine Weiterfahrt des Fahrzeugs erst freigegeben wird, wenn der Hinweis durch den Fahrzeugführer quittiert wurde. Diese Quittierung kann auf beliebige geeignete Weise gestaltet sein. Im einfachsten Fall erfolgt die Quittierung durch das Umschalten von dem Normalmodus in den Steilstreckenmodus.

Bei bestimmten Varianten kann vorgesehen sein, dass bei einem letzten Halt vor Einfahrt in einen Streckenabschnitt mit einer Steilstrecke eine Weiterfahrt erst freigegeben wird, wenn ein Umschalten von dem Normalmodus in den Steilstreckenmodus erfolgt ist, wobei die Weiterfahrt insbesondere erst freigegeben werden kann, wenn eine erfolgreiche Prüfung der Funktionsfähigkeit der Bremsanlage erfolgt ist. Hiermit kann in einfacher Weise sichergestellt werden, dass die maximale Bremsleistung, die insbesondere Grundlage für die Bestimmung des zweiten Reaktionszeitraums gewesen sein kann, auch tatsächlich zur Verfügung steht.

Mit allen vorgenannten Varianten kann in einfacher Weise sichergestellt werden, dass ein Streckenabschnitt mit einer Steilstrecke nur befahren wird, wenn ein Umschalten von dem Normalmodus in den Steilstreckenmodus erfolgt ist.

Bei bestimmten Varianten mit besonders hohem Sicherheitslevel SIL (mithin also einem besonders hohen Maß an Sicherheit) erfolgt in dem Steilstreckenmodus eine Überwachung auf Überschreiten einer vorgebbaren maximalen Fahrgeschwindigkeit des Fahrzeugs. Bei Feststellen eines Überschreitens der maximalen Fahrgeschwindigkeit des Fahrzeugs erfolgt dann ebenfalls eine Zwangsbremsung des Fahrzeugs. Hierdurch kann selbst innerhalb des zweiten Reaktionszeitraums ein Überschreiten der maximalen Fahrgeschwindigkeit erkannt und eine frühzeitige und damit in jedem Fall rechtzeitige Reaktion sichergestellt werden.

Um einen besonders hohen Sicherheitslevel zu gewährleisten, kann vorgesehen sein, dass die Überwachung auf Überschreiten der maximalen Fahrgeschwindigkeit signaltechnisch bzw. funktional unabhängig von der Fahrerüberwachung erfolgt. Ein Ausfall einer der Überwachungen kann daher keinen zwangsläufigen gleichzeitigen Ausfall der anderen Überwachung nach sich ziehen.

Eine Vorgabe der maximalen Fahrgeschwindigkeit kann grundsätzlich zu einem beliebigen geeigneten Zeitpunkt vor, bei oder nach Einfahrt in einen Streckenabschnitt mit einer Steilstrecke erfolgen. Bei bestimmten Varianten erfolgt die Vorgabe der maximalen Fahrgeschwindigkeit vor Einfahrt in einen Streckenabschnitt mit einer Steilstrecke. Besonders einfach kann dies bei einem Halt des Fahrzeugs erfolgen, beispielsweise in einer Station oder vor einem Haltesignal.

Insbesondere kann auch die Vorgabe der maximalen Fahrgeschwindigkeit auf beliebige geeignete Weise ausgelöst werden. So kann die Vorgabe der maximalen Fahrgeschwindigkeit alleine durch den Fahrzeugführer erfolgen. Ebenso kann sie automatisch erfolgen, indem seitens der Fahrzeugsteuerung erkannt wird, dass der vorausliegende Streckenabschnitt eine Steilstrecke umfasst. Besonders einfach kann eine solche Erkennung allein anhand der Erfassung eines Halts in der letzten Station und/oder dem letzten Haltesignal vor Einfahrt in einen Streckenabschnitt mit einer Steilstrecke erfolgen.

Bei bestimmten Varianten wird vor Einfahrt in einen Streckenabschnitt mit einer Steilstrecke, insbesondere bei einem letzten Halt vor Einfahrt in den Streckenabschnitt, ein Hinweis zur Vorgabe der maximalen Fahrgeschwindigkeit an den Fahrzeugführer ausgegeben. Dieser kann dann die Vorgabe durchführen, wobei die Vorgabe dann frei oder in vorgebbaren Schritten bzw. auf einen oder mehrere vorgebbare Werte erfolgen kann. Dabei kann vorgesehen sein, dass eine Weiterfahrt des Fahrzeugs erst freigegeben wird, wenn der Hinweis durch den Fahrzeugführer quittiert wurde. Diese Quittierung kann auf beliebige geeignete Weise gestaltet sein. Im einfachsten Fall erfolgt die Quittierung durch die Vorgabe eines für die anstehende Steilstreckenfahrt zulässigen Wertes für die maximale Fahrgeschwindigkeit.

Bei bestimmten Varianten kann vorgesehen sein, dass bei einem letzten Halt vor Einfahrt in einen Streckenabschnitt mit einer Steilstrecke eine Weiterfahrt erst freigegeben wird, wenn eine zulässige Vorgabe der maximalen Fahrgeschwindigkeit erfolgt ist, wobei auch hier die Weiterfahrt insbesondere erst freigegeben werden kann, wenn eine erfolgreiche Prüfung der Funktionsfähigkeit der Bremsanlage erfolgt ist. Hiermit kann in einfacher Weise sichergestellt werden, dass die maximale Bremsleistung, die insbesondere Grundlage für die Bestimmung der zulässigen maximalen Fahrgeschwindigkeit gewesen sein kann, auch tatsächlich zur Verfügung steht.

Mit allen vorgenannten Varianten kann in einfacher Weise sichergestellt werden, dass ein Streckenabschnitt mit einer Steilstrecke nur befahren wird, wenn eine geeignete Einstellung der maximalen Fahrgeschwindigkeit erfolgt ist.

Bei bestimmten Varianten mit besonders hohem Sicherheitslevel SIL wird zumindest in dem Steilstreckenmodus die Funktionsfähigkeit der Bremsanlage, insbesondere die Funktionsfähigkeit einer dynamischen Bremseinrichtung der Bremsanlage und/oder einer pneumatischen Bremseinrichtung der Bremsanlage, überwacht. Bei Feststellen eines Ausfalls eines Teils der Bremsanlage erfolgt dann eine Zwangsbremsung des Fahrzeugs. Hiermit kann in einfacher Weise sichergestellt werden, dass die maximale Bremsleistung, die insbesondere Grundlage für die Bestimmung des zweiten Reaktionszeitraums und/oder der zulässigen maximalen Fahrgeschwindigkeit gewesen sein kann, auch tatsächlich zur Verfügung steht. Ist dies nicht mehr der Fall, wird dann die Zwangsbremsung eingeleitet, um zuverlässig kritische Situationen zu vermeiden.

Bei der Zwangsbremsung kann im Fall eines Überschreitens der maximalen Fahrgeschwindigkeit oder des Ausfalls eines Teils der Bremsanlage vorgesehen sein, dass das Fahrzeug nur auf eine bestimmte vorgebbare Geschwindigkeit abgebremst wird, bei welcher sichergestellt ist, dass das Fahrzeug mit der tatsächlich vorhandenen Bremsleistung noch vollständig abgebremst werden kann. Bei bestimmten Varianten erfolgt im Falle einer (aus welchem Grund auch immer eingeleiteten) Zwangsbremsung des Fahrzeugs stets ein Abbremsen des Fahrzeugs bis zum Stillstand, um einfach zuverlässig Gefahrensituationen auszuschließen. Hierbei kann eine Ursache für das Auslösen der Zwangsbremsung auch als Auslöser für ein Abschalten eines Traktionsmodus einer Traktionseinrichtung des Fahrzeugs verwendet werden. Das Abschalten des Traktionsmodus der Traktionseinrichtung und die Zwangsbremsung können dabei in beliebiger geeigneter zeitlicher Abfolge (gleichzeitig oder nacheinander) erfolgen. Typischerweise erfolgt das Abschalten der Traktionseinrichtung vor oder gleichzeitig mit dem Auslösen der Zwangsbremsung, damit die Bremsanlage nicht gegen die Traktionseinrichtung arbeiten muss. Die Traktionseinrichtung kann zudem in einen dynamischen Bremsmodus geschaltet werden, um die Zwangsbremsung zu unterstützen.

Es kann vorgesehen sein, dass der Fahrzeugführer für den Zeitraum der Zwangsbremsung bis zur vorgegebenen Endgeschwindigkeit, mithin gegebenenfalls also bis zum Stillstand keine Einflussmöglichkeit auf die Bremsung hat. Bei anderen Varianten kann eine eingeleitete Zwangsbremsung durch eine vorzugsweise nicht irrtümlich vornehmbare Betätigungshandlung des Fahrzeugführers abgebrochen werden.

Bei bestimmten vorteilhaften Varianten mit hohem Sicherheitslevel SIL kann nach Stillstand des Fahrzeugs in einen Fixiermodus geschaltet werden, in dem das Fahrzeug, insbesondere durch eine Federspeicherbremseinrichtung der Bremsanlage, gegen Wegrollen gesichert wird. Auch hier kann ein Aufheben des Fixiermodus nur durch eine separate vorzugsweise nicht irrtümlich vornehmbare Betätigungshandlung des Fahrzeugführers erfolgen. Der Fixiermodus kann dabei insbesondere so gestaltet sein, dass (beispielsweise über eine Fahrgeschwindigkeit und/oder eine Position des Fahrzeugs) der Stillstand des Fahrzeugs überwacht wird und bei Feststellen einer Bewegung des Fahrzeugs eine erneute Zwangsbremsung eingeleitet wird.

Gemäß einem weiteren Aspekt betrifft die vorliegende Erfindung eine Bremsanlage für ein Schienenfahrzeug, das durch einen Fahrzeugführer betreibbar ist, mit einer Steuereinrichtung und einer Bremsanordnung zum Abbremsen des Fahrzeugs. Die Steuereinrichtung ist dazu ausgebildet, den Fahrzeugführer über eine Fahrerüberwachung zu überwachen, wobei eine Inaktivität des Fahrzeugführers festgestellt wird, wenn innerhalb eines vorgebbaren Reaktionszeitraums nach einem Überwachungsereignis keine Reaktion des Fahrzeugführers erfasst wird. Weiterhin ist die Steuereinrichtung dazu ausgebildet, bei Feststellen der Inaktivität des Fahrzeugführers eine Zwangsbremsung des Fahrzeugs über die Bremsanordnung auszulösen. Die Steuereinrichtung ist dazu ausgebildet, bei der Fahrerüberwachung eine Unterscheidung zwischen einer Normalstreckenfahrt und einer Steilstreckenfahrt vorzunehmen, indem die Steuereinrichtung zwischen einem Normalstreckenmodus und einem Steilstreckenmodus umschaltet, wobei eine Steilstrecke bei Überschreiten einer vorgebbaren Gefälleschwelle für ein Gefälle einer befahrenen Strecke vorliegt. Dabei ist für die Normalstreckenfahrt ein erster Reaktionszeitraum vorgegeben, während für die Steilstreckenfahrt ein zweiter Reaktionszeitraum vorgegeben ist, der kleiner ist als der erste Reaktionszeitraum.

Mit einer solchen Bremsanlage lassen sich die oben beschriebenen Varianten und Vorteile in demselben Maß realisieren, sodass zur Vermeidung von Wiederholungen insoweit lediglich auf die obigen Ausführungen verwiesen wird.

Die vorliegende Erfindung betrifft weiterhin ein Schienenfahrzeug mit einer erfindungsgemäßen Bremsanlage. Auch hiermit lassen sich die oben im Zusammenhang mit dem Verfahren beschriebenen Varianten und Vorteile in demselben Maße realisieren, sodass insoweit lediglich auf die obigen Ausführungen Bezug genommen wird.

Weitere bevorzugte Ausführungen der vorliegenden Erfindung ergeben sich aus den abhängigen Ansprüchen sowie der nachfolgenden Beschreibung bevorzugter Ausführungsbeispiele, welche auf die beigefügten Figuren Bezug nimmt.

### KURZE BESCHREIBUNG DER ZEICHNUNGEN

- Figur 1: ist eine schematische Ansicht eines bevorzugten Ausführungsbeispiels eines erfindungsgemäßen Schienenfahrzeugs mit einem bevorzugten Ausführungsbeispiel einer erfindungsgemäßen Bremsanlage, bei der ein bevorzugtes Ausführungsbeispiel eines erfindungsgemäßen Verfahrens zur Steuerung einer Bremsanlage zum Einsatz kommt.
- Figur 2: ist ein Ablaufdiagramm des erfindungsgemäßen Verfahrens, welches bei dem Schienenfahrzeug aus Figur 1 zum Einsatz kommt.

### DETAILLIERTE BESCHREIBUNG DER ERFINDUNG

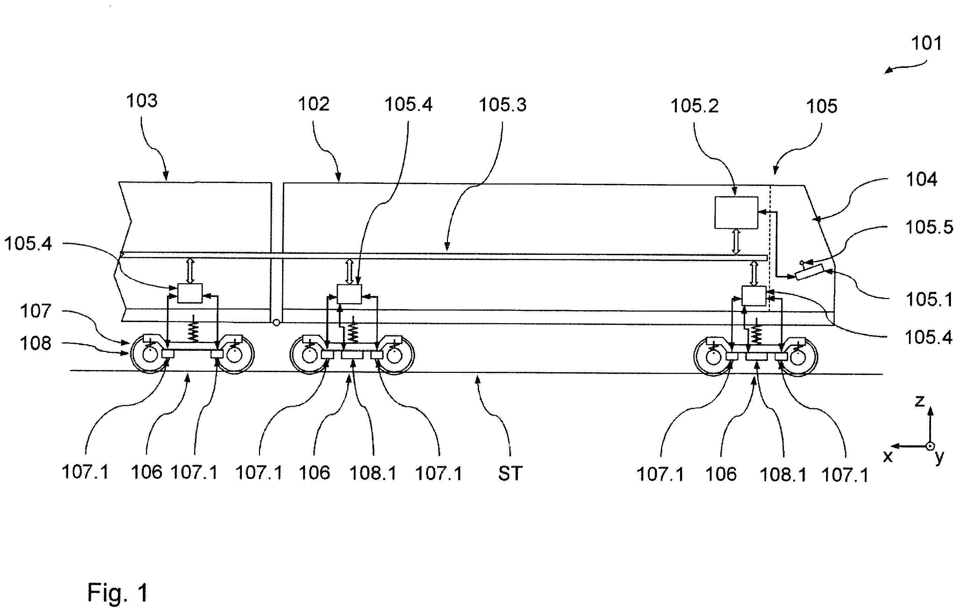

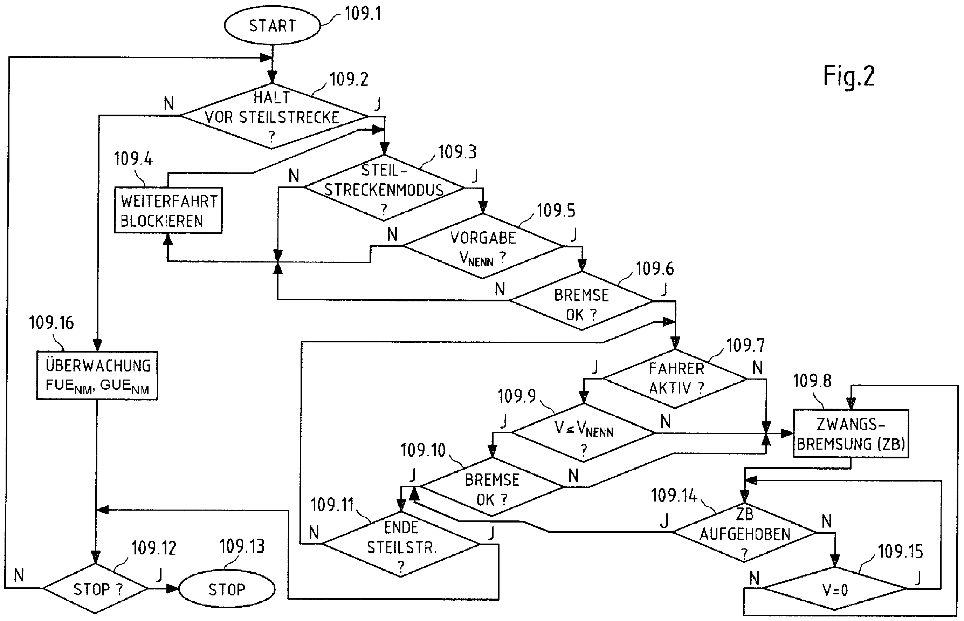

Im Folgenden wird unter Bezugnahme auf die Figuren 1 und 2 ein bevorzugtes Ausführungsbeispiel eines erfindungsgemäßen Schienenfahrzeugs 101 mit einem bevorzugten Ausführungsbeispiel einer erfindungsgemäßen Bremsanlage 107 beschrieben, bei der ein bevorzugtes Ausführungsbeispiel des erfindungsgemäßen Verfahrens zur Steuerung einer Bremsanlage zum Einsatz kommt. Bei dem Schienenfahrzeug 101 handelt es sich um einen mehrteiligen Triebzug aus mehreren miteinander gekuppelten Wagen 102, 103. Es versteht sich jedoch, dass die Erfindung auch bei beliebigen anderen Fahrzeugkonfigurationen zur Anwendung kommen kann. Dies sind beispielsweise lokbespannte Züge ebenso wie einteilige Fahrzeuge.

Zum einfacheren Verständnis der nachfolgenden Erläuterungen ist in den Figuren ein (durch die Radaufstandsebene der Fahrwerke des Fahrzeugs 101 auf gerader ebene r Strecke T vorgegebenes) Fahrzeug-Koordinatensystem x,y,z angegeben, in dem die x-Koordinate die Fahrzeuglängsrichtung, die y-Koordinate die Fahrzeugquerrichtung und die z-Koordinate die Fahrzeughöhenrichtung des Schienenfahrzeugs 101 bezeichnen.

Der Wagen 102 bildet ein freies Ende des Zuges 101 mit einem Führerstand 104 für einen Fahrzeugführer bzw. Fahrer des Fahrzeugs 101. In diesem Führerstand 104 befindet sich ein Steuerpult 105.1 einer Steuereinrichtung 105 des Zuges 101. Mittels des Steuerpults 105.1, das mit einer zentralen Steuereinheit 105.2 des Fahrzeugs verbunden ist, erzeugt der Fahrer unter anderem Steuerbefehle für eine zentrale Steuereinheit 105.2 und betreibt bzw. steuert so das Fahrzeug 101.

Die zentrale Steuereinheit 105.2 ist im vorliegenden Beispiel über einen Zugbus 105.3 mit dezentralen Steuereinheiten 105.4 verbunden. Die dezentralen Steuereinheiten 105.4 sind jeweils einem Fahrwerk 106 des Wagens 102 bzw. 103 zugeordnet und erzeugen in Abhängigkeit von den Befehlen der zentralen Steuereinheit 105.2 ihrerseits Steuerbefehle für die dem Komponenten 107.1 einer Bremsanlage 107 sowie die Komponenten 108.1 einer Antriebsanlage 108 des Fahrzeugs. Es versteht sich jedoch, dass bei anderen Varianten der Erfindung auch eine beliebige andere Architektur der Steuereinrichtung 105 realisieren lässt, welche die Implementierung der vorliegenden Erfindung zulässt.

Über das Steuerpult 105.1 steuert der Fahrer unter anderem die Fahrgeschwindigkeit des Fahrzeugs und passt diese an die Gegebenheiten der befahrenen Strecke an. Um sicherzustellen, dass bei plötzlichem Ausfall des Fahrers (beispielsweise durch ein unvorhergesehenes akutes gesundheitliches Problem) eine fahrerlose Weiterfahrt des Fahrzeugs 101 mit unangepasster Geschwindigkeit unterbunden wird, ist in der Steuereinrichtung 105 eine Fahrerüberwachung FUE (in Form einer Sicherheitsfahrschaltung oder Totmannschaltung) implementiert.

Diese Fahrerüberwachung FUE der Steuereinrichtung 105 erzwingt, dass der Fahrer in regelmäßigen, typischerweise vorgegebenen Abständen innerhalb eines vorgegebenen Reaktionszeitraums TR nach einem Überwachungsereignis eine oder mehrere Betätigungshandlungen am Steuerpult 105.1 vornehmen muss (beispielsweise ein Eingabeelement des Steuerpults 105.1 betätigen muss), um der Steuereinrichtung 105 seine uneingeschränkte Verfügbarkeit zu signalisieren. Reagiert der Fahrer innerhalb des Reaktionszeitraums TR nicht wie vorgegeben, stellt die Steuereinrichtung 105 eine Inaktivität des Fahrers fest und geht von einem Ausfall des Fahrers aus. Als Reaktion hierauf leitet die Steuereinrichtung 105 eine Zwangsbremsung des Fahrzeugs 101 ein, indem sie die Bremsanlage 107 entsprechend ansteuert. Dabei wird das Fahrzeug 107 bis zum Stillstand abgebremst, sofern keine Gegenreaktion bzw. kein Eingriff des Fahrers erfolgt.

Bei dem Überwachungsereignis kann es sich um ein beliebiges Ereignis handeln. Typischerweise ist es die letzte vorangegangene Betätigungshandlung, mit welcher der Fahrer der Steuereinrichtung 105 seine uneingeschränkte Verfügbarkeit zu signalisiert hat.

Die Fahrerüberwachung FUE der Steuereinrichtung 105 dient somit in hinlänglich bekannter Weise dazu, sicherzustellen, dass bei Ausfall des Fahrers eine führerlose Weiterfahrt des Fahrzeugs 101 verhindert wird. Insbesondere wird dadurch vermieden, dass das Fahrzeug bestimmte Streckenabschnitte mit überhöhter Geschwindigkeit durchfährt.

Gemäß der vorliegenden Erfindung nimmt die Fahrerüberwachung FUE der Steuereinrichtung 105 dabei zusätzlich eine Unterscheidung zwischen einer Normalstreckenfahrt NSF und einer Steilstreckenfahrt SSF vor. Eine Normalstreckenfahrt NSF liegt dabei auf einer Strecke ST mit "normalem" Gefälle G vor, das im vorliegenden Beispiel bis zu einer Gefälleschwelle GS = 40‰ reicht. Eine Steilstreckenfahrt SSF liegt vor, wenn auf einem Abschnitt STA der Strecke ST ein "hohes" Gefälle G oberhalb der Gefälleschwelle GS = 40‰ vorliegt. Bei anderen Varianten kann die Gefälleschwelle GS aber auch einen anderen Wert haben. Insbesondere kann sie von der Art des Schienenfahrzeugs 101 und/oder dessen zulässiger Maximalbeladung bzw. maximaler Masse und/oder dessen maximaler Bremsleistung PBₘₐₓ abhängen. Bei bestimmten Varianten beträgt die Gefälleschwelle 20‰, vorzugsweise 30‰, weiter vorzugsweise 40‰.

In der Steuereinrichtung 105 (beispielsweise in einem Speicher der zentralen Steuereinheit 105.2) ist zu diesem Zweck für die Normalstreckenfahrt NSF ein erster Reaktionszeitraum TR1 vorgegeben und für die Steilstreckenfahrt SSF ein zweiter Reaktionszeitraum TR2 vorgegeben, der kleiner ist als der erste Reaktionszeitraum TR1.

Der zweite Reaktionszeitraum TR2 kann dabei einen beliebigen geeigneten Wert aufweisen, der eine rechtzeitige Reaktion der Steuereinrichtung 105 bei Ausfall des Fahrzeugführers während einer Steilstreckenfahrt SSF gewährleistet. Dies ist dann der Fall, wenn bei einer maximal zulässigen Beladung des Fahrzeugs 101 sichergestellt ist, dass bei einer Zwangsbremsung mit der maximal verfügbaren Bremsleistung der Bremsanlage 107 keine Überschreitung einer Grenzgeschwindigkeit V_{G} erfolgt, mit der ein sicheres Befahren des Streckenabschnitts STA gerade noch gewährleistet ist.

Im vorliegenden Beispiel sind für das Fahrzeug 101 für zumindest einen Streckenabschnitt STA der befahrenen Strecke ST eine Nennbetriebsgeschwindigkeit V_{Nenn} und eine Grenzgeschwindigkeit V_{Grenz} vorgegeben. Dabei ist die Nennbetriebsgeschwindigkeit V_{Nenn} eine maximale Geschwindigkeit, mit der das Fahrzeug 101 im Normalbetrieb in dem betreffenden Streckenabschnitt STA höchstens betrieben werden soll. Die Grenzgeschwindigkeit V_{Grenz} ist eine maximale Geschwindigkeit, mit der bei einer maximal zulässigen Beladung des Fahrzeugs 101 ein sicheres Befahren des Streckenabschnitts STA noch gewährleistet ist.

Der zweite Reaktionszeitraum TR2 ist im vorliegenden Beispiel derart gewählt, dass eine Ausgangsgeschwindigkeit V_{ZB} des Fahrzeugs 101 beim Einsetzen der Zwangsbremsung unterhalb einer Geschwindigkeitsschwelle Vₗᵢₘ liegt. Die Ausgangsgeschwindigkeit V_{ZB}, ist dabei die Geschwindigkeit, die das Fahrzeug 101 (mit Maximalbeladung) ausgehend von der Nennbetriebsgeschwindigkeit V_{Nenn} bei Einsetzen der Zwangsbremsung (im Falle einer Inaktivität des Fahrers) bedingt durch das Gefälle G des Streckenabschnitts STA erreicht hat. Die Geschwindigkeitsschwelle Vₗᵢₘ ist die Geschwindigkeit, bei der trotz einer Zwangsbremsung mit der maximalen Bremsleistung PBₘₐₓ der Bremsanlage 107 ein Überschreiten der Grenzgeschwindigkeit V_{Grenz} erfolgt.

Durch den (gegenüber der Normalstreckenfahrt NSF) verkürzten Reaktionszeitraum TR2 für die Steilstreckenfahrt SSF kann somit in einfacher Weise sichergestellt werden, dass mit einer Zwangsbremsung reagiert wird, bevor aufgrund der zusätzlichen Beschleunigung durch das Gefälle G überhaupt eine kritische Geschwindigkeitsschwelle Vₗᵢₘ überschritten werden kann.

Im vorliegenden Beispiel wird mit dem Einsetzen der Zwangsbremsung (bei voll funktionsfähiger Bremsanlage 107) schon nach sehr kurzer Zeit eine Verzögerung des Fahrzeugs 101 erzielt, die größer ist als die Beschleunigung des Fahrzeugs 101 durch das Gefälle G. Im vorliegenden Beispiel entspricht die Geschwindigkeitsschwelle Vₗᵢₘ daher etwa der Grenzgeschwindigkeit V_{Grenz} (d.h. es gilt Vₗᵢₘ ≈ V_{Grenz}). Je nachdem, wie schnell mit der Bremsanlage 107 eine Verzögerung des Fahrzeugs 101 erzielt werden kann, die größer ist als die Beschleunigung des Fahrzeugs durch das Gefälle, kann die Geschwindigkeitsschwelle Vₗᵢₘ daher bei anderen Varianten aber auch entsprechend unterhalb Grenzgeschwindigkeit V_{Grenz} liegen.

So kann das Fahrzeug 101 im vorliegenden Beispiel durch ein Gefälle G = 55‰ des Streckenabschnitts STA mit weiteren 0,54 m/s² beschleunigt werden. Da im vorliegenden Beispiel ein Gefälle bis G = 40‰ als Normalstrecke angesehen wird, ist nur die Differenz von 15‰ als Aufschlag zu berücksichtigen. Damit ergibt sich für den Streckenabschnitt STA eine mögliche zusätzliche Beschleunigung des Fahrzeugs von 0,15 m/s² bzw. ein Geschwindigkeitszuwachs pro Sekunde von 0,53 km/h, wenn nicht gebremst wird.

Normalerweise wird die Talfahrt (also die Fahrt abwärts durch den Streckenabschnitt STA) bereits gebremst durchgeführt, wobei ein Wechsel von Bremsen nach Beschleunigen vom Fahrzeug 101 nicht sofort umgesetzt wird. Für die Fahrt auf einer Normalstrecke (also auf Strecken mit einem Gefälle bis zu G = 40‰) arbeitet die Fahrerüberwachung FUE_{NM} mit einem ersten Reaktionszeitraum von TR1 = 35 s (bis zum Bremseinsatz). Wird hier der Gefälleüberschuss auf das maximale Gefälle der Normalstrecke aufgeschlagen, ergibt sich für den Steilstreckenmodus SSM eine erforderliche Reduktion des Reaktionszeitraums für die Fahrerüberwachung FUE_{SSM} um einen ähnlichen Wert, um ausreichend sicher zu sein. Hieraus ergibt sich im vorliegenden Beispiel für die Fahrerüberwachung FUE_{SSM} im Steilstreckenmodus SSM ein zweiter Reaktionszeitraum TR2 = 20 s (bis zum Bremseinsatz). Es versteht sich jedoch, dass bei anderen Varianten (insbesondere in Abhängigkeit von den Gegebenheiten der befahrenen Strecke ST) auch andere Reaktionszeiträume gewählt sein können. So kann der zweite Reaktionszeitraum TR2 bei bestimmten Varianten 10 s bis 30 s, vorzugsweise 15 s bis 25 s, weiter vorzugsweise 15 s bis 20 s, betragen, da sich hiermit in den meisten Situationen eine rechtzeitige Zwangsbremsung bei Ausfall des Fahrers realisieren lässt, ohne den Fahrer durch zu häufige Quittierungshandlungen bzw. Betätigungshandlungen zu überlasten. Ebenso kann der erste Reaktionszeitraum TR1 bei bestimmten Varianten 25 s bis 60 s, vorzugsweise 25 s bis 35 s, weiter vorzugsweise 30 s bis 35 s, betragen. Hiermit werden bei Normalstreckenfahrt NSF trotz hinreichender Sicherheit ausreichend lange Intervalle zwischen den Quittierungshandlungen bzw. Betätigungshandlungen des Fahrers erzielt.

Das Umschalten der Steuereinrichtung 105 von dem Normalstreckenmodus NSM (für die Normalstreckenfahrt NSF) in den Steilstreckenmodus (für die Steilstreckenfahrt SSF) kann grundsätzlich zu einem beliebigen geeigneten Zeitpunkt vor, bei oder nach Einfahrt in einen Streckenabschnitt STA mit einer Steilstrecke erfolgen. Im vorliegenden Beispiel erfolgt das Umschalten von dem Normalmodus NSM in den Steilstreckenmodus SSM vor Einfahrt in einen Streckenabschnitt STA mit einer Steilstrecke, nämlich bei einem letzten Halt des Fahrzeugs 101 (in einer Station oder vor einem Haltesignal) vor Einfahrt in den Streckenabschnitt STA mit der Steilstrecke.

Das Umschalten von dem Normalmodus NSM in den Steilstreckenmodus SSM kann auf beliebige geeignete Weise ausgelöst werden. So kann dies beispielsweise alleine durch den Fahrer erfolgen, der aus seiner Kenntnis der Strecke heraus handelt. Ebenso kann sie automatisch (d.h. ohne Zutun des Fahrers) erfolgen, indem seitens der Fahrzeugsteuerung 105 erkannt wird, dass der vorausliegende Streckenabschnitt STA eine Steilstrecke umfasst. Diese Erkennung kann anhand externer Signale geschehen (beispielsweise durch eine externe Zugbeeinflussung über Balisen oder dergleichen). Besonders einfach kann eine Erkennung allein anhand der Erfassung eines Halts in der letzten Station und/oder dem letzten Haltesignal vor Einfahrt in einen Streckenabschnitt STA mit einer Steilstrecke erfolgen.

Es versteht sich hierbei, dass gegebenenfalls auch eine teilautomatische Variante vorgesehen sein kann, bei welcher der Fahrer einen entsprechenden Hinweis seitens der Fahrzeugsteuerung 105 erhält, dann aber die Umschaltung manuell vornehmen muss. So wird im vorliegenden Beispiel vor Einfahrt in einen Streckenabschnitt STA mit einer Steilstrecke, bei dem letzten (regulären bzw. fahrplangemäßen) Halt vor Einfahrt in den Streckenabschnitt STA, über die Steuereinrichtung 105 ein Hinweis zum Umschalten der Steuereinrichtung 105 von einem Normalstreckenmodus NSM (für die Normalstreckenfahrt NSF) in den Steilstreckenmodus SSM (für die Steilstreckenfahrt SSF) an den Fahrzeugführer ausgegeben. Der Fahrzeugführer löst dann das Umschalten aus, indem er beispielsweise eine vorgegebene Eingabe am Steuerpult 105.1 vornimmt.

Im vorliegenden Beispiel ist vorgesehen, dass eine Weiterfahrt des Fahrzeugs 101 erst freigegeben wird, wenn der Hinweis zum Umschalten in den Steilstreckenmodus SSM durch den Fahrzeugführer quittiert wurde. Diese Quittierung kann auf beliebige geeignete Weise gestaltet sein. Im einfachsten Fall erfolgt die Quittierung durch das tatsächliche Umschalten der Steuereinrichtung 105 von dem Normalstreckenmodus NSM in den Steilstreckenmodus SSM. Hierdurch wird zudem in einfacher Weise erreicht, dass eine Weiterfahrt erst freigegeben wird, wenn ein Umschalten von dem Normalstreckenmodus NSM in den Steilstreckenmodus SSM tatsächlich erfolgt ist.

Im vorliegenden Beispiel gibt die Steuereinrichtung 105 die Weiterfahrt zudem erst frei, wenn eine erfolgreiche Prüfung der Funktionsfähigkeit der Bremsanlage 107 erfolgt ist (beispielsweise durch eine oder mehrere Bremsproben). Hiermit kann in einfacher Weise sichergestellt werden, dass die maximale Bremsleistung PBₘₐₓ der Bremsanlage 107 (die Grundlage für die Bestimmung des zweiten Reaktionszeitraums TR2 ist) auch tatsächlich zur Verfügung steht.

Um einen besonders hohen Sicherheitslevel SIL (mithin also ein besonders hohes Maß an Sicherheit) zu erzielen, nimmt die Steuereinrichtung 105 im vorliegenden Beispiel in dem Steilstreckenmodus SSM zudem eine Geschwindigkeitsüberwachung GUE_{SSM} auf Überschreiten einer vorgebbaren maximalen Fahrgeschwindigkeit des Fahrzeugs 101 vor, indem sie ein Überschreiten der Nennbetriebsgeschwindigkeit V_{Nenn} überwacht. Bei Feststellen eines Überschreitens dieser maximalen Fahrgeschwindigkeit, also der für den Streckenabschnitt STA vorgegebenen Nennbetriebsgeschwindigkeit V_{Nenn}, erfolgt dann ebenfalls eine Zwangsbremsung des Fahrzeugs 101.

Wie bereits oben erwähnt kann für den Fahrer eine etwas (z. B. um 5 km/h) unter der Nennbetriebsgeschwindigkeit V_{Nenn} liegende betriebliche Höchstgeschwindigkeit vorgegeben sein, an die er sich laut Betriebsvorschrift halten soll. Wird diese betriebliche Höchstgeschwindigkeit um eine bestimmte Toleranz (z. B. 2 km/h) überschritten, kann die Steuereinrichtung 105 ein Warnsignal an den Fahrer ausgeben, das gegebenenfalls wieder verschwindet, sobald die betriebliche Höchstgeschwindigkeit wieder eingehalten bzw. unterschritten wird.

Durch diese Geschwindigkeitsüberwachung GUE_{SSM} kann also selbst innerhalb des zweiten Reaktionszeitraums TR2 ein Überschreiten der Nennbetriebsgeschwindigkeit V_{Nenn} erkannt und eine frühzeitige und damit in jedem Fall rechtzeitige Reaktion sichergestellt werden. Insbesondere kann hierdurch zuverlässig vermieden werden, dass eine Fahrgeschwindigkeit überschritten wird, bei der die maximale Bremsleistung PBₘₐₓ nicht mehr ausreicht, um das Fahrzeug 101 bei dem maximalen Gefälle Gₘₐₓ der Steilstrecke im Streckenabschnitt STA (beispielsweise vor einem Haltesignal) zum Stillstand zu bringen.

Um einen besonders hohen Sicherheitslevel SIL zu gewährleisten, ist im vorliegenden Beispiel vorgesehen, dass die Geschwindigkeitsüberwachung GUE_{SSM} auf Überschreiten der maximalen Fahrgeschwindigkeit signaltechnisch unabhängig von der Fahrerüberwachung FUE_{SSM} erfolgt. Ein Ausfall einer der beiden Überwachungen FUE_{SSM}, GUE_{SSM} kann daher keinen zwangsläufigen gleichzeitigen Ausfall der anderen Überwachung nach sich ziehen.

Es versteht sich, dass die Vorgabe der maximalen Fahrgeschwindigkeit, also der für den Streckenabschnitt STA vorgegebenen Nennbetriebsgeschwindigkeit V_{Nenn}, grundsätzlich zu einem beliebigen geeigneten Zeitpunkt vor, bei oder nach Einfahrt in den Streckenabschnitt STA mit einer Steilstrecke erfolgen kann. Im vorliegenden Beispiel erfolgt diese Vorgabe der maximalen Fahrgeschwindigkeit (Nennbetriebsgeschwindigkeit V_{Nenn}) ebenfalls beim letzten regulären Halt des Fahrzeugs 101 (in einer Station oder vor einem Haltesignal) vor Einfahrt in den Streckenabschnitt STA mit der Steilstrecke. Die Vorgabe kann dabei vor, zusammen mit oder nach dem Umschalten in den Steilstreckenmodus SSM der Steuereinrichtung 105 erfolgen.

Auch hier kann über die Steuereinrichtung 105 ein Hinweis zur Vorgabe der maximalen Fahrgeschwindigkeit (Nennbetriebsgeschwindigkeit V_{Nenn}) an den Fahrzeugführer ausgegeben werden. Dieser kann die Vorgabe dann durchführen, wobei die Vorgabe frei oder in vorgebbaren Schritten erfolgen kann. Dabei kann der Fahrer gegebenenfalls aus mehreren vorgebbaren Werten auswählen. Bei weiteren Varianten kann aber auch vorgesehen sein, dass die maximale Fahrgeschwindigkeit für den Streckenabschnitt STA fest vorgegeben ist und automatisch mit Umschalten in den Steilstreckenmodus SSM in der Steuereinrichtung 105 gesetzt wird.

Im vorliegenden Beispiel kann vorgesehen sein, dass eine Weiterfahrt des Fahrzeugs 101 durch die Steuereinrichtung 105 erst freigegeben wird, wenn der Hinweis zur Vorgabe der maximalen Fahrgeschwindigkeit durch den Fahrzeugführer quittiert wurde. Auch diese Quittierung kann auf beliebige geeignete Weise gestaltet sein. Im einfachsten Fall erfolgt die Quittierung wiederum durch die tatsächliche Vorgabe eines für die anstehende Steilstreckenfahrt (also den nachfolgenden Streckenabschnitt STA) zulässigen Wertes für die maximale Fahrgeschwindigkeit (Nennbetriebsgeschwindigkeit V_{Nenn}). Hierdurch wird in einfacher Weise sichergestellt, dass die Weiterfahrt erst erfolgt, wenn die Vorgabe einer zulässigen maximalen Fahrgeschwindigkeit erfolgt ist.

Die oben bereits beschriebene Freigabe der Weiterfahrt erst nach erfolgreicher Prüfung der Funktionsfähigkeit der Bremsanlage 107 stellt dabei sicher, dass die maximale Bremsleistung PBₘₐₓ, die Grundlage für die Bestimmung der zulässigen maximalen Fahrgeschwindigkeit (Nennbetriebsgeschwindigkeit V_{Nenn}) ist, auch tatsächlich zur Verfügung steht.

Um den Sicherheitslevel SIL weiter zu erhöhen, wird im vorliegenden Beispiel zudem zumindest in dem Steilstreckenmodus SSM der Steuereinrichtung 105 die Funktionsfähigkeit der Bremsanlage 107 durch die Steuereinrichtung 105 überwacht. Hierbei können insbesondere die Funktionsfähigkeit einer dynamischen Bremseinrichtung der Bremsanlage 107 und/oder einer pneumatischen Bremseinrichtung der Bremsanlage 107 überwacht werden, welche einen wesentlichen Anteil an der Bremsleistung der Bremsanlage 107 haben.

Bei Feststellen eines Ausfalls eines Teils der Bremsanlage 107 erfolgt dann eine Zwangsbremsung des Fahrzeugs 101. Hiermit kann in einfacher Weise sichergestellt werden, dass die maximale Bremsleistung PBₘₐₓ, die Grundlage für die Bestimmung des zweiten Reaktionszeitraums TR2 und der zulässigen maximalen Fahrgeschwindigkeit (Nennbetriebsgeschwindigkeit V_{Nenn}) ist, auch tatsächlich zur Verfügung steht. Ist dies nicht mehr der Fall, wird durch die Steuereinrichtung 105 sofort eine Zwangsbremsung eingeleitet, um zuverlässig kritische Situationen zu vermeiden.

Bei der Zwangsbremsung kann im Fall eines Überschreitens der maximalen Fahrgeschwindigkeit (Nennbetriebsgeschwindigkeit V_{Nenn}) oder des Ausfalls eines Teils der Bremsanlage 107 vorgesehen sein, dass das Fahrzeug 101 nur auf eine bestimmte vorgebbare Geschwindigkeit V_{Not} (< V_{Nenn}) abgebremst wird, bei welcher sichergestellt ist, dass das Fahrzeug 101 mit der tatsächlich noch vorhandenen Bremsleistung PB_{Rest} noch vollständig abgebremst werden kann. Dabei kann vorgesehen sein, dass die maximale Fahrgeschwindigkeit für den weiteren Betrieb als eine neue Nennbetriebsgeschwindigkeit V_{Nenn,neu} auf den Wert dieser geringeren Geschwindigkeit V_{Not} gesetzt wird (V_{Not} = V_{Nenn,neu}).

Bei anderen Varianten erfolgt im Falle einer (aus welchem Grund auch immer eingeleiteten) Zwangsbremsung des Fahrzeugs 101 jedoch stets ein Abbremsen des Fahrzeugs 101 bis zum Stillstand, um einfach und zuverlässig Gefahrensituationen auszuschließen.

Im vorliegenden Beispiel schaltet die Steuereinrichtung 105 im Falle einer (aus welchem Grund auch immer eingeleiteten) Zwangsbremsung auch den Traktionsmodus der Traktionseinrichtung 108 des Fahrzeugs 101 ab. Das Abschalten des Traktionsmodus der Traktionseinrichtung 108 und die Zwangsbremsung über die Bremsanlage 107 können dabei in beliebiger geeigneter zeitlicher Abfolge (gleichzeitig oder nacheinander) erfolgen. Typischerweise erfolgt das Abschalten der Traktionseinrichtung 108 vor oder gleichzeitig mit dem Auslösen der Zwangsbremsung, damit die Bremsanlage 107 nicht gegen die Traktionseinrichtung 108 arbeiten muss. Die Traktionseinrichtung 108 kann dabei zumindest zunächst in einen dynamischen Bremsmodus geschaltet werden, um die Zwangsbremsung zu unterstützen.

Im vorliegenden Beispiel kann vorgesehen sein, dass der Fahrzeugführer für den Zeitraum der Zwangsbremsung bis zur vorgegebenen Endgeschwindigkeit, mithin gegebenenfalls also bis zum Stillstand des Fahrzeugs 101, keine Einflussmöglichkeit auf die Bremsung hat. Bei anderen Varianten kann eine durch die Steuereinrichtung 105 eingeleitete Zwangsbremsung durch eine oder mehrere (vorzugsweise nicht irrtümlich vornehmbare) Betätigungshandlung des Fahrers (beispielsweise eine vorgegebene komplexe Bewegungssequenz an einem Fahrhebel 105.5 des Steuerpults 105.1 oder mehrere unabhängige Bedienhandlungen) abgebrochen werden.

Im vorliegenden Beispiel wird die Steuereinrichtung 105 nach Stillstand des Fahrzeugs 101 in einen Fixiermodus FM geschaltet. In diesem Fixiermodus FM ist das Fahrzeug 101 im vorliegenden Beispiel durch eine Federspeicherbremseinrichtung der Bremsanlage 107 gegen Wegrollen gesichert.

Ein Aufheben des Fixiermodus FM kann im vorliegenden Beispiel nur durch eine oder mehrere separate (vorzugsweise nicht irrtümlich vornehmbare) Betätigungshandlungen des Fahrers erfolgen. Beispielsweise kann vorgesehen sein, dass der Fahrer hierzu ein entsprechendes Eingabeelement im Führerstand 104 betätigen muss. Gegebenenfalls kann sich dieses Eingabeelement auch nicht am Steuerpult 105.1, sondern an anderer, weniger einfach zugänglicher Stelle befinden, um sicherzustellen, dass es nur bewusst betätigt wird.

Der Fixiermodus FM kann so gestaltet sein, dass über die Steuereinrichtung 105 der Stillstand des Fahrzeugs 101 überwacht wird und die Steuereinrichtung 105 bei Feststellen einer Bewegung des Fahrzeugs 101 eine erneute Zwangsbremsung einleitet.

Nachfolgend wird unter Bezugnahme auf die Figuren 1 und 2 der Ablauf des erfindungsgemäßen Verfahrens zur Steuerung der Bremsanlage 107 des Schienenfahrzeugs 101 beschrieben.

Nachdem das Verfahren in einem Schritt 109.1 gestartet wurde, wird in einem Schritt 109.2 geprüft, ob sich das Fahrzeug 101 (wie oben beschrieben) an einem letzten regulären Halt vor einem Streckenabschnitt STA mit einer Steilstrecke befindet. Die Information über den das Vorliegen eines solchen Halts kann die Steuereinrichtung 105 auf beliebige geeignete Weise erhalten (beispielsweise über eine hinlänglich bekannte Positionsüberwachung und/oder eine so genannte externe Zugbeeinflussung etc.).

Ist dies der Fall, wird in der oben beschriebenen Weise ein Hinweis an den Fahrer ausgegeben, dass er von dem Normalstreckenmodus NSM in den Steilstreckenmodus SSM umschalten muss, die maximale Fahrgeschwindigkeit (also die Nennbetriebsgeschwindigkeit V_{Nenn}) für den nachfolgenden Streckenabschnitt STA vorgeben muss und eine Überprüfung der Funktionsfähigkeit der Bremsanlage 107 vornehmen muss.

Anschließend wird in einem Schritt 109.3 von der Steuereinrichtung 105 geprüft, ob von dem Normalstreckenmodus NSM in den Steilstreckenmodus SSM umgeschaltet wurde. Ist dies nicht der Fall, blockiert die Steuereinrichtung 105 in einem Schritt 109.4 die Weiterfahrt des Fahrzeugs 101, gibt einen entsprechenden Hinweis an den Fahrer aus und springt zu Schritt 109.3 zurück.

Anderenfalls (d.h. wenn das Umschalten in den Steilstreckenmodus SSM festgestellt wird) wird in einem Schritt 109.5 von der Steuereinrichtung 105 geprüft, ob eine zulässige maximale Fahrgeschwindigkeit (also die Nennbetriebsgeschwindigkeit V_{Nenn}) für den nachfolgenden Streckenabschnitt STA vorgegeben wurde. Ist dies nicht der Fall, blockiert die Steuereinrichtung 105 in dem Schritt 109.4 die Weiterfahrt des Fahrzeugs 101, gibt einen entsprechenden Hinweis an den Fahrer aus und springt zu Schritt 109.3 zurück. Anderenfalls (d.h. wenn die maximale Fahrgeschwindigkeit vorgegeben wurde) wird in einem Schritt 109.6 von der Steuereinrichtung 105 die Funktionsfähigkeit der Bremsanlage 107 geprüft. Ist dies nicht der Fall, blockiert die Steuereinrichtung 105 in dem Schritt 109.4 die Weiterfahrt des Fahrzeugs 101, gibt einen entsprechenden Hinweis an den Fahrer aus und springt zu Schritt 109.3 zurück.

Anderenfalls (d.h. wenn die Funktionsfähigkeit der Bremsanlage 107 festgestellt wurde) wird die Weiterfahrt in den Streckenabschnitt STA freigegeben und in einem Schritt 109.7 dann im Zuge der oben beschriebenen Fahrerüberwachung mit der Reaktionszeit TR2 geprüft, ob der Fahrer aktiv ist.

Hierzu wird bei Erreichen eines Vorwarnzeitpunkts in einem Schritt 109.8 von der Steuereinrichtung 105 zunächst ein entsprechender Warnhinweis an den Fahrer ausgegeben. Der Vorwarnzeitpunkt TVW ergibt sich dabei aus der zweiten Reaktionszeit TR2 abzüglich eines Vorwarnintervalls. Reagiert der Fahrer trotz des Warnhinweises nicht angemessen innerhalb der vorgegebenen Reaktionszeit TR2, wird mittels der Bremsanlage 107 eine Zwangsbremsung eingeleitet.

Hierbei versteht es sich, dass bei bestimmten Varianten vorgesehen sein kann, dass die Überwachung des Vorwarnzeitpunkts TVW bzw. der Reaktionszeit TR2 jeweils alleine zeitbezogen oder distanzbezogen erfolgen kann. Ebenso kann die Überwachung überlagert erfolgen (also jeweils als fester Zeitraum oder feste Fahrdistanz, je nachdem welches Kriterium eine frühere Reaktion erzwingt). Schließlich können die unterschiedlichen Überwachungsarten sequenziell eingesetzt werden, also beispielsweise zeitbezogen bis zum Vorwarnzeitpunkt TVW und dann distanzbezogen bis zum Erreichen der Reaktionszeit TR2 (oder umgekehrt).

Anderenfalls (d.h. wenn die Aktivität des Fahrers festgestellt wurde) wird in einem Schritt 109.9 überprüft, ob die maximale Fahrgeschwindigkeit (also die Nennbetriebsgeschwindigkeit V_{Nenn}) eingehalten wird. Ist dies nicht der Fall wird in einem Schritt 109.8 von der Steuereinrichtung 105 ein entsprechender Hinweis an den Fahrer ausgegeben und mittels der Bremsanlage 107 eine Zwangsbremsung eingeleitet.

Anderenfalls (d.h. wenn die Nennbetriebsgeschwindigkeit V_{Nenn} eingehalten wird) wird in einem Schritt 109.10 von der Steuereinrichtung 105 die Funktionsfähigkeit der Bremsanlage 107 geprüft. Ist dies nicht der Fall wird in einem Schritt 109.8 von der Steuereinrichtung 105 ein entsprechender Hinweis an den Fahrer ausgegeben und mittels der Bremsanlage 107 eine Zwangsbremsung eingeleitet.

Anderenfalls (d.h. wenn die Funktionsfähigkeit der Bremsanlage 107 festgestellt wurde) wird in einem Schritt 109.11 von der Steuereinrichtung 105 geprüft, ob ein Ende des Streckenabschnitts STA mit der Steilstrecke erreicht wurde. Ist dies nicht der Fall, wird zum Schritt 109.7 zurück gesprungen.

Anderenfalls wird die Steuereinrichtung 105 in den Normalstreckenmodus NSM zurück geschaltet. Hierfür kann ein ähnliches oder identisches Prozedere vorgesehen sein, wie es oben für das Umschalten von dem Normalstreckenmodus NSM in den Steilstreckenmodus beschrieben wurde. In einem Schritt 109.12 wird dann geprüft, ob der Verfahrensablauf enden soll. Ist dies der Fall, endet der Verfahrensablauf in einem Schritt 109.13. Andernfalls wird zum Schritt 109.2 zurück gesprungen.

Im Falle einer Zwangsbremsung wird in einem an den Schritt 109.8 anschließenden Schritt 109.14 geprüft, ob der Fahrer die Zwangsbremsung wie oben beschrieben aufgehoben hat. Ist dies der Fall, wird zum Schritt 109.11 gesprungen. Anderenfalls wird in einem Schritt 109.15 überprüft, ob die Fahrgeschwindigkeit V gleich Null ist. Ist dies nicht der Fall, wird zum Schritt 109.8 gesprungen und die Zwangsbremsung weiter durchgeführt.

Wird in dem Schritt 109.15 festgestellt, dass die Fahrgeschwindigkeit V gleich Null ist, wird die Steuereinrichtung 105 wie oben beschrieben in den Fixiermodus geschaltet und zum Schritt 109.14 gesprungen. Dort wird erneut geprüft, ob der Fahrer die Zwangsbremsung wie oben beschrieben aufgehoben hat. Ist dies nicht der Fall, wird in einem Schritt 109.15 erneut überprüft, ob die Fahrgeschwindigkeit V gleich Null ist. Ist dies nicht der Fall, wird zum Schritt 109.8 gesprungen und eine erneute Zwangsbremsung initiiert.

Es sei an dieser Stelle der Vollständigkeit halber erwähnt, dass auch bei Normalstreckenfahrt NSF, also auch im Normalstreckenmodus NSM eine entsprechend auf die Normalstrecke abgestimmte Fahrerüberwachung FUE_{NM} sowie gegebenenfalls auch eine Geschwindigkeitsüberwachung GUE_{NM} erfolgen kann, wie dies in Figur 2 durch den Schritt 109.16 gezeigt ist.

Wie nachfolgend anhand des Normalstreckenmodus NSM beschrieben wird, können bei der Fahrerüberwachung FUE als Quittierungshandlungen bzw. Betätigungshandlungen grundsätzlich beliebige Handlungen des Fahrzeugführers dienen, welche auf seine Einsatzfähigkeit schließen lassen. Im vorliegenden Beispiel muss der Fahrzeugführer ein (nicht dargestelltes) Pedal dauerhaft drücken und dieses als Quittierungshandlung bzw. Betätigungshandlung für kurze Zeit loslassen sowie erneut betätigen, um die Quittierungshandlung vollständig abzuschließen.

Bei einer Fahrerüberwachung FUE auf Zeitbasis (so genannte Zeit-Zeit-Sifa) vergehen nach der vollständigen Quittierungshandlung (Lösen und erneutes Betätigen des Pedals) beispielsweise 30 s ohne Warnung, 2,5 s mit einem (nicht dargestellten) Leuchtmelder des Steuerpults 105.1 als Warnung sowie weitere 2,5 s mit dem Leuchtmelder und einer Tonausgabe/Sprachausgabe am Steuerpult 105.1 als Warnung, bevor dann nach insgesamt 35 s (= 30 s + 2,5 s + 2,5 s) ohne Aktion des Fahrers die Zwangsbremsung erfolgt. Lässt der Fahrer das Pedal los, betätigt es aber nicht erneut, so vergehen bevorzugt 2,5 s mit dem Leuchtmelder als Warnung sowie weitere 2,5 s mit dem Leuchtmelder und einer Tonausgabe/Sprachausgabe als Warnung, bevor nach insgesamt 5 s (= 2,5 s + 2,5 s) ohne Aktion des Fahrers die Zwangsbremsung erfolgt.

Vergleichbares gilt für die Fahrerüberwachung FUE auf Wegbasis (Weg-Weg-Sifa), wobei sich hier insbesondere die Wege während der Vorwarnung unterscheiden können. So vergehen nach der vollständigen Quittierungshandlung (Lösen und erneutes Betätigen des Pedals) beispielsweise 1400 m Fahrweg ohne Warnung, 200 m mit dem Leuchtmelder als Warnung sowie weitere 200 m mit dem Leuchtmelder und einer Tonausgabe/Sprachausgabe als Warnung, bevor nach insgesamt 1800 m (= 1400 m + 200 m + 200 m) ohne Aktion des Fahrers die Zwangsbremsung erfolgt. Lässt der Fahrer das Pedal los, betätigt es aber nicht erneut, so vergehen bevorzugt 100 m Fahrweg mit dem Leuchtmelder als Warnung sowie weitere 100 m mit dem Leuchtmelder und der Tonausgabe/Sprachausgabe als Warnung, bevor bereits nach insgesamt 200 m (= 100 m + 100 m) ohne Aktion des Fahrers die Zwangsbremsung erfolgt.

Es versteht sich, dass auch kombinierte Weg-Zeit-Sifas bzw. Zeit-Weg-Sifas implementiert werden können. Ebenso kann bei der Zeit-Zeit-Sifa die Vorwarnzeit variieren bzw. können bei der Weg-Weg-Sifa die Vorwarnwege gleich sein.

Obwohl die vorliegende Erfindung vorstehend ausschließlich anhand eines bestimmten Schienenfahrzeugs 101 beschrieben wurde versteht es sich, dass sie sich auch bei beliebigen anderen Schienenfahrzeugen einsetzen lässt.

## Patentansprüche

1. Verfahren zur Steuerung einer Bremsanlage (107) eines Schienenfahrzeugs (101), das durch einen Fahrzeugführer betrieben wird, bei dem
- der Fahrzeugführer über eine Fahrerüberwachung überwacht wird, wobei eine Inaktivität des Fahrzeugführers festgestellt wird, wenn innerhalb eines vorgebbaren Reaktionszeitraums nach einem Überwachungsereignis keine Reaktion des Fahrzeugführers erfasst wird, und
- bei Feststellen der Inaktivität des Fahrzeugführers eine Zwangsbremsung des Fahrzeugs (101) erfolgt,
**dadurch gekennzeichnet, dass**
- die Fahrerüberwachung eine Unterscheidung zwischen einer Normalstreckenfahrt und einer Steilstreckenfahrt vornimmt, indem zwischen einem Normalstreckenmodus und einem Steilstreckenmodus umgeschaltet wird, wobei eine Steilstrecke bei Überschreiten einer vorgebbaren Gefälleschwelle für ein Gefälle einer befahrenen Strecke vorliegt, wobei
- für die Normalstreckenfahrt ein erster Reaktionszeitraum vorgegeben wird und für die Steilstreckenfahrt ein zweiter Reaktionszeitraum vorgegeben wird, der kleiner ist als der erste Reaktionszeitraum.

2. Verfahren nach Anspruch 1, wobei
- für das Fahrzeug (101) für zumindest einen Streckenabschnitt der befahrenen Strecke eine Nennbetriebsgeschwindigkeit und eine Grenzgeschwindigkeit vorgegeben sind,
- die Nennbetriebsgeschwindigkeit eine maximale Geschwindigkeit ist, mit der das Fahrzeug (101) im Normalbetrieb in dem betreffenden Streckenabschnitt höchstens betrieben werden soll,
- die Grenzgeschwindigkeit eine maximale Geschwindigkeit ist, mit der bei einer maximal zulässigen Beladung des Fahrzeugs (101) ein sicheres Befahren des Streckenabschnitts noch gewährleistet ist, und
- der zweite Reaktionszeitraum derart gewählt ist, dass eine Ausgangsgeschwindigkeit, die das Fahrzeug (101) mit der maximal zulässigen Beladung bei Inaktivität des Fahrzeugführers ausgehend von der Nennbetriebsgeschwindigkeit bedingt durch das Gefälle des Streckenabschnitts beim Einsetzen der Zwangsbremsung erreicht hat, unterhalb einer Geschwindigkeitsschwelle liegt, bei der trotz einer Zwangsbremsung mit einer maximalen Bremsleistung der Bremsanlage (107) ein Überschreiten der Grenzgeschwindigkeit erfolgt.

3. Verfahren nach Anspruch 1 oder 2, wobei
- der zweite Reaktionszeitraum 10 s bis 30 s, vorzugsweise 15 s bis 25 s, weiter vorzugsweise 15 s bis 20 s, beträgt
und/oder
- der erste Reaktionszeitraum 25 s bis 60 s, vorzugsweise 25 s bis 35 s, weiter vorzugsweise 30 s bis 35 s, beträgt
und/oder
- die Gefälleschwelle 20‰, vorzugsweise 30‰, weiter vorzugsweise 40‰ beträgt.

4. Verfahren nach einem der vorhergehenden Ansprüche, wobei
- das Umschalten von dem Normalmodus in den Steilstreckenmodus vor Einfahrt in einen Streckenabschnitt mit einer Steilstrecke erfolgt, wobei das Umschalten insbesondere automatisch und/oder bei einem Halt des Fahrzeugs (101) erfolgt,
und/oder
- vor Einfahrt in einen Streckenabschnitt mit einer Steilstrecke, insbesondere bei einem letzten Halt vor Einfahrt in den Streckenabschnitt, ein Hinweis zum Umschalten von dem Normalmodus in den Steilstreckenmodus an den Fahrzeugführer ausgegeben wird, wobei insbesondere eine Weiterfahrt erst freigegeben wird, wenn der Hinweis durch den Fahrzeugführer, insbesondere durch das Umschalten von dem Normalmodus in den Steilstreckenmodus, quittiert wurde,
und/oder
- bei einem letzten Halt vor Einfahrt in einen Streckenabschnitt mit einer Steilstrecke eine Weiterfahrt erst freigegeben wird, wenn ein Umschalten von dem Normalmodus in den Steilstreckenmodus erfolgt ist, wobei die Weiterfahrt insbesondere erst freigegeben wird, wenn eine erfolgreiche Prüfung der Funktionsfähigkeit der Bremsanlage (107) erfolgt ist.

5. Verfahren nach einem der vorhergehenden Ansprüche, wobei
- in dem Steilstreckenmodus eine Überwachung auf Überschreiten einer vorgebbaren maximalen Fahrgeschwindigkeit des Fahrzeugs (101) erfolgt und
- bei Feststellen eines Überschreitens der maximalen Fahrgeschwindigkeit des Fahrzeugs (101) eine Zwangsbremsung des Fahrzeugs (101) erfolgt,
wobei
- insbesondere die Überwachung auf Überschreiten der maximalen Fahrgeschwindigkeit signaltechnisch unabhängig von der Fahrerüberwachung erfolgt.

6. Verfahren nach Anspruch 5, wobei
- eine Vorgabe der maximalen Fahrgeschwindigkeit vor Einfahrt in einen Streckenabschnitt mit einer Steilstrecke erfolgt, wobei die Vorgabe insbesondere automatisch und/oder bei einem Halt des Fahrzeugs (101) erfolgt,
und/oder
- vor Einfahrt in einen Streckenabschnitt mit einer Steilstrecke, insbesondere bei einem letzten Halt vor Einfahrt in den Streckenabschnitt, ein Hinweis zur Vorgabe der maximalen Fahrgeschwindigkeit an den Fahrzeugführer ausgegeben wird, wobei insbesondere eine Weiterfahrt erst freigegeben wird, wenn der Hinweis durch den Fahrzeugführer, insbesondere durch Vorgabe der maximalen Fahrgeschwindigkeit, quittiert wurde,
und/oder
- bei einem letzten Halt vor Einfahrt in einen Streckenabschnitt mit einer Steilstrecke eine Weiterfahrt erst freigegeben wird, wenn eine Vorgabe der maximalen Fahrgeschwindigkeit erfolgt ist, wobei die Weiterfahrt insbesondere erst freigegeben wird, wenn eine erfolgreiche Prüfung der Funktionsfähigkeit der Bremsanlage (107) erfolgt ist.

7. Verfahren nach einem der vorhergehenden Ansprüche, wobei
- zumindest in dem Steilstreckenmodus die Funktionsfähigkeit der Bremsanlage (107), insbesondere die Funktionsfähigkeit einer dynamischen Bremseinrichtung der Bremsanlage (107) und/oder einer pneumatischen Bremseinrichtung der Bremsanlage (107), überwacht wird und
- bei Feststellen eines Ausfalls eines Teils der Bremsanlage (107) eine Zwangsbremsung des Fahrzeugs (101) erfolgt.

8. Verfahren nach einem der vorhergehenden Ansprüche, wobei
- im Falle einer Zwangsbremsung des Fahrzeugs (101) ein Abbremsen des Fahrzeugs (101) bis zum Stillstand erfolgt,
wobei
- insbesondere eine Ursache für das Auslösen der Zwangsbremsung als Auslöser für ein Abschalten eines Traktionsmodus einer Traktionseinrichtung (108) des Fahrzeugs (101) verwendet wird
und/oder
- insbesondere eine eingeleitete Zwangsbremsung durch eine Betätigungshandlung des Fahrzeugführers abgebrochen wird
und/oder
- insbesondere nach Stillstand des Fahrzeugs (101) in einen Fixiermodus geschaltet wird, in dem das Fahrzeug, insbesondere durch eine Federspeicherbremseinrichtung der Bremsanlage (107), gegen Wegrollen gesichert wird, wobei ein Aufheben des Fixiermodus insbesondere nur durch eine separate Betätigungshandlung des Fahrzeugführers erfolgt und/oder insbesondere ein Stillstand des Fahrzeugs (101) überwacht wird und bei Feststellen einer Bewegung des Fahrzeugs (101) eine erneute Zwangsbremsung eingeleitet wird.

9. Bremsanlage für ein Schienenfahrzeug, das durch einen Fahrzeugführer betreibbar ist, mit einer Steuereinrichtung (105) und einer Bremsanordnung zum Abbremsen des Fahrzeugs (101), wobei
- die Steuereinrichtung (105) dazu ausgebildet ist, den Fahrzeugführer über eine Fahrerüberwachung zu überwachen, wobei eine Inaktivität des Fahrzeugführers festgestellt wird, wenn innerhalb eines vorgebbaren Reaktionszeitraums nach einem Überwachungsereignis keine Reaktion des Fahrzeugführers erfasst wird, und
- die Steuereinrichtung (105) dazu ausgebildet ist, bei Feststellen der Inaktivität des Fahrzeugführers eine Zwangsbremsung des Fahrzeugs (101) über die Bremsanordnung auszulösen,
**dadurch gekennzeichnet, dass**
- die Steuereinrichtung (105) dazu ausgebildet ist, bei der Fahrerüberwachung eine Unterscheidung zwischen einer Normalstreckenfahrt und einer Steilstreckenfahrt vorzunehmen, indem die Steuereinrichtung (105) zwischen einem Normalstreckenmodus und einem Steilstreckenmodus umschaltet, wobei eine Steilstrecke bei Überschreiten einer vorgebbaren Gefälleschwelle für ein Gefälle einer befahrenen Strecke vorliegt, wobei
- für die Normalstreckenfahrt ein erster Reaktionszeitraum vorgegeben ist und für die Steilstreckenfahrt ein zweiter Reaktionszeitraum vorgegeben ist, der kleiner ist als der erste Reaktionszeitraum.

10. Bremsanlage nach Anspruch 9, wobei
- für das Fahrzeug (101) für zumindest einen Streckenabschnitt der befahrenen Strecke eine Nennbetriebsgeschwindigkeit und eine Grenzgeschwindigkeit vorgegeben sind,
- die Nennbetriebsgeschwindigkeit eine maximale Geschwindigkeit ist, mit der das Fahrzeug (101) im Normalbetrieb in dem betreffenden Streckenabschnitt höchstens betrieben werden soll,
- die Grenzgeschwindigkeit eine maximale Geschwindigkeit ist, mit der bei einer maximal zulässigen Beladung des Fahrzeugs (101) ein sicheres Befahren des Streckenabschnitts noch gewährleistet ist, und
- der zweite Reaktionszeitraum derart gewählt ist, dass eine Ausgangsgeschwindigkeit, die das Fahrzeug (101) mit der maximal zulässigen Beladung bei Inaktivität des Fahrzeugführers ausgehend von der Nennbetriebsgeschwindigkeit beim Einsetzen der Zwangsbremsung bedingt durch das Gefälle des Streckenabschnitts erreicht hat, unterhalb einer Geschwindigkeitsschwelle liegt, bei der trotz einer Zwangsbremsung mit einer maximalen Bremsleistung der Bremsanlage (107) ein Überschreiten der Grenzgeschwindigkeit erfolgt,
wobei
- der zweite Reaktionszeitraum insbesondere 10 s bis 30 s, vorzugsweise 15 s bis 25 s, weiter vorzugsweise 15 s bis 20 s, beträgt
und/oder
- der erste Reaktionszeitraum insbesondere 25 s bis 60 s, vorzugsweise 25 s bis 35 s, weiter vorzugsweise 30 s bis 35 s, beträgt
und/oder
- die Gefälleschwelle insbesondere 20‰, vorzugsweise 30‰, weiter vorzugsweise 40‰ beträgt.

11. Bremsanlage nach einem der Ansprüche 9 oder 10, wobei
- die Steuereinrichtung (105) derart ausgebildet ist, dass das Umschalten von dem Normalmodus in den Steilstreckenmodus vor Einfahrt in einen Streckenabschnitt mit einer Steilstrecke erfolgt, wobei das Umschalten insbesondere automatisch und/oder bei einem Halt des Fahrzeugs (101) erfolgt,
und/oder
- die Steuereinrichtung (105) derart ausgebildet ist, dass vor Einfahrt in einen Streckenabschnitt mit einer Steilstrecke, insbesondere bei einem letzten Halt vor Einfahrt in den Streckenabschnitt, ein Hinweis zum Umschalten von dem Normalmodus in den Steilstreckenmodus an den Fahrzeugführer ausgegeben wird, wobei insbesondere eine Weiterfahrt erst freigegeben wird, wenn der Hinweis durch den Fahrzeugführer, insbesondere durch das Umschalten von dem Normalmodus in den Steilstreckenmodus, quittiert wurde,
und/oder
- die Steuereinrichtung (105) derart ausgebildet ist, dass bei einem letzten Halt vor Einfahrt in einen Streckenabschnitt mit einer Steilstrecke eine Weiterfahrt erst freigegeben wird, wenn ein Umschalten von dem Normalmodus in den Steilstreckenmodus erfolgt ist, wobei die Weiterfahrt insbesondere erst freigegeben wird, wenn eine erfolgreiche Prüfung der Funktionsfähigkeit der Bremsanlage (107) erfolgt ist.

12. Bremsanlage nach einem der Ansprüche 9 bis 11, wobei
- die Steuereinrichtung (105) derart ausgebildet ist, dass in dem Steilstreckenmodus eine Überwachung auf Überschreiten einer vorgebbaren maximalen Fahrgeschwindigkeit des Fahrzeugs (101) erfolgt, und
- die Steuereinrichtung (105) derart ausgebildet ist, dass bei Feststellen eines Überschreitens der maximalen Fahrgeschwindigkeit des Fahrzeugs (101) eine Zwangsbremsung des Fahrzeugs (101) erfolgt,
wobei
- die Steuereinrichtung (105) insbesondere derart ausgebildet ist, dass die Überwachung auf Überschreiten der maximalen Fahrgeschwindigkeit signaltechnisch unabhängig von der Fahrerüberwachung erfolgt.
und/oder
- die Steuereinrichtung (105) insbesondere derart ausgebildet ist, dass eine Vorgabe der maximalen Fahrgeschwindigkeit vor Einfahrt in einen Streckenabschnitt mit einer Steilstrecke erfolgt, wobei das Umschalten insbesondere automatisch und/oder bei einem Halt des Fahrzeugs (101) erfolgt,
und/oder
- die Steuereinrichtung (105) insbesondere derart ausgebildet ist, dass vor Einfahrt in einen Streckenabschnitt mit einer Steilstrecke, insbesondere bei einem letzten Halt vor Einfahrt in den Streckenabschnitt, ein Hinweis zur Vorgabe der maximalen Fahrgeschwindigkeit an den Fahrzeugführer ausgegeben wird, wobei insbesondere eine Weiterfahrt erst freigegeben wird, wenn der Hinweis durch den Fahrzeugführer, insbesondere durch Vorgabe der maximalen Fahrgeschwindigkeit, quittiert wurde,
und/oder
- die Steuereinrichtung (105) insbesondere derart ausgebildet ist, dass bei einem letzten Halt vor Einfahrt in einen Streckenabschnitt mit einer Steilstrecke eine Weiterfahrt erst freigegeben wird, wenn eine Vorgabe der maximalen Fahrgeschwindigkeit erfolgt ist, wobei die Weiterfahrt insbesondere erst freigegeben wird, wenn eine erfolgreiche Prüfung der Funktionsfähigkeit der Bremsanlage (107) erfolgt ist.

13. Bremsanlage nach einem der Ansprüche 9 bis 12, wobei
- die Steuereinrichtung (105) derart ausgebildet ist, dass zumindest in dem Steilstreckenmodus die Funktionsfähigkeit der Bremsanordnung, insbesondere die Funktionsfähigkeit einer dynamischen Bremseinrichtung der Bremsanordnung und/oder einer pneumatischen Bremseinrichtung der Bremsanordnung, überwacht wird und
- die Steuereinrichtung (105) derart ausgebildet ist, dass bei Feststellen eines Ausfalls eines Teils der Bremsanordnung eine Zwangsbremsung des Fahrzeugs (101) erfolgt.

14. Bremsanlage nach einem der Ansprüche 9 bis 13, wobei
- die Steuereinrichtung (105) derart ausgebildet ist, dass im Falle einer Zwangsbremsung des Fahrzeugs (101) ein Abbremsen des Fahrzeugs (101) bis zum Stillstand erfolgt,
wobei
- die Steuereinrichtung (105) insbesondere derart ausgebildet ist, dass eine Ursache für das Auslösen der Zwangsbremsung als Auslöser für ein Abschalten eines Traktionsmodus einer Traktionseinrichtung des Fahrzeugs (101) verwendet wird,
und/oder
- die Steuereinrichtung (105) insbesondere derart ausgebildet ist, dass eine eingeleitete Zwangsbremsung durch eine Betätigungshandlung des Fahrzeugführers abgebrochen wird,
und/oder
- die Steuereinrichtung (105) insbesondere derart ausgebildet ist, dass nach Stillstand des Fahrzeugs (101) in einen Fixiermodus geschaltet wird, in dem das Fahrzeug, insbesondere durch eine Federspeicherbremseinrichtung der Bremsanlage (107), gegen Wegrollen gesichert ist, wobei ein Aufheben des Fixiermodus insbesondere nur durch eine separate Betätigungshandlung des Fahrzeugführers erfolgt und/oder insbesondere ein Stillstand des Fahrzeugs (101) überwacht wird und bei Feststellen einer Bewegung des Fahrzeugs (101) eine erneute Zwangsbremsung eingeleitet wird..

15. Schienenfahrzeug mit einer Bremsanlage (107) nach einem der Ansprüche 9 bis 14.

## Claims

1. Method for controlling a braking system (107) of a rail vehicle (101) which is operated by a vehicle driver, wherein
- said vehicle driver is monitored via a driver monitoring, an inactivity of said vehicle driver being detected if no reaction of said vehicle driver is detected within a predeterminable reaction period after a monitoring event, and
- if inactivity of said vehicle driver is detected, forced braking of said vehicle (101) takes place,
**characterized in that**
- said driver monitoring makes a distinction between a normal route travel and a steep route travel by switching between a normal route mode and a steep route mode, a steep route being present when a predeterminable slope threshold for a slope of a traveled route is exceeded, wherein
- a first reaction period is predetermined for said normal route travel and a second reaction period, which is shorter than said first reaction period, is predetermined for said steep route travel.

2. Method according to claim 1, wherein
- a nominal operating speed and a limit speed are predetermined for said vehicle (101) for at least a route section of said traveled route,
- said nominal operating speed is a maximum speed at which said vehicle (101) is to be operated at most in normal operation in the respective route section,
- said limit speed is a maximum speed at which safe travel on said route section is still ensured with a maximum permissible load of said vehicle (101), and
- said second reaction period is selected in such a way that an initial speed, which said vehicle (101) has reached with said maximum permissible load when said vehicle driver is inactive, starting from said nominal operating speed as a result of said slope of said route section when said forced braking is initiated, is below a speed threshold at which said limit speed is exceeded despite forced braking with a maximum braking power of said braking system (107).

3. Method according to claim 1 or 2, wherein
- said second reaction period is 10 s to 30 s, preferably 15 s to 25 s, more preferably 15 s to 20 s,
and/or
- said first reaction period is 25 s to 60 s, preferably 25 s to 35 s, more preferably 30 s to 35 s,
and/or
- said slope threshold is 20‰, preferably 30‰, more preferably 40‰.

4. Method according to any one of the preceding claims, wherein
- the switching from said normal mode to said steep route mode takes place before entry into a route section with a steep route, wherein said switching takes place in particular automatically and/or at a stop of said vehicle (101),
and/or
- before entry into a route section with a steep route, in particular at a last stop before entry into said route section, an indication for switching from said normal mode to said steep route mode is output to said vehicle driver, wherein in particular further travel is only enabled when said indication has been acknowledged by said vehicle driver, in particular by switching from said normal mode to said steep route mode,
and/or
- in the case of a last stop before entry into a route section with a steep route, further travel is only enabled when a switching from said normal mode to said steep route mode has taken place, said further travel in particular being only enabled when a successful test of the operability of said braking system (107) has taken place.

5. Method according to any one of the preceding claims, wherein
- in said steep route mode, monitoring is carried out for exceeding a predeterminable maximum travel speed of said vehicle (101), and
- if exceeding of said maximum travel speed of said vehicle (101) is detected, forced braking of said vehicle (101) takes place,
wherein
- in particular said monitoring for exceeding said maximum travel speed is carried out in terms of signal technology independently of said driver monitoring.

6. Method according to claim 5, wherein
- a presetting of said maximum travel speed is carried out before entry into a route section with a steep route, the presetting being carried out in particular automatically and/or at a stop of said vehicle (101),
and/or
- before entry into a route section with a steep route, in particular at a last stop before entry into said route section, an indication for presetting of said maximum travel speed is output to said vehicle driver, wherein in particular further travel is only enabled when said indication has been acknowledged by said vehicle driver, in particular by presetting of said maximum travel speed,
and/or
- in the case of a last stop before entry into a route section with a steep route, further travel is only enabled when a presetting of a maximum travel speed has taken place, said further travel in particular being enabled only when a successful test of the operability of said braking system (107) has taken place.

7. Method according to any one of the preceding claims, wherein
- the operability of said braking system (107), in particular the operability of a dynamic braking device of said braking system (107) and/or a pneumatic braking device of said braking system (107), is monitored at least in said steep route mode, and
- if a failure of a part of said braking system (107) is detected, forced braking of said vehicle (101) takes place.

8. Method according to any one of the preceding claims, wherein
- in the event of forced braking of said vehicle (101), braking of said vehicle (101) to a standstill takes place,
wherein
- in particular a cause for triggering said forced braking is used as trigger for switching off a traction mode of a traction device (108) of said vehicle (101),
and/or
- in particular an initiated forced braking is aborted by an actuating action of said vehicle driver,
and/or
- in particular, after said vehicle (101) has come to a standstill, it is switched to a fixing mode in which said vehicle is secured against rolling away, in particular by a spring brake device of said braking system (107), said fixing mode being cancelled in particular only by a separate actuating action of said vehicle driver and/or in particular a standstill of said vehicle (101) being monitored and, if movement of said vehicle (101) is detected, renewed forced braking being initiated.

9. Braking system for a rail vehicle which is operatable by a vehicle driver, having a control device (105) and a braking arrangement for braking said vehicle (101), wherein
- said control device (105) is configured to monitor said vehicle driver by means of driver monitoring, an inactivity of said vehicle driver being detected if no reaction of said vehicle driver is detected within a predeterminable reaction period after a monitoring event, and
- said control device (105) is configured to trigger forced braking of said vehicle (101) via said brake arrangement when inactivity of said vehicle driver is detected,
**characterized in that**
- said control device (105) is configured to make a distinction between a normal route travel and a steep route travel during driver monitoring, **in that** said control device (105) switches between a normal route mode and a steep route mode, a steep-route being present when a predeterminable slope threshold for a slope of a traveled route is exceeded, wherein
- a first reaction period is predetermined for said normal route travel and a second reaction period, which is shorter than said first reaction period, is predetermined for said route travel.

10. Braking system according to claim 9, wherein
- a nominal operating speed and a limit speed are predetermined for said vehicle (101) for at least one route section of the traveled route,
- said nominal operating speed is a maximum speed at which said vehicle (101) is to be operated at most in normal operation in the respective route section,
- said limit speed is a maximum speed at which safe travel on said route section is still ensured with a maximum permissible load of said vehicle (101), and
- said second reaction period is selected in such a way that an initial speed, which said vehicle (101) has reached with said maximum permissible load when said vehicle driver is inactive, starting from said nominal operating speed as a result of said slope of said route section when said forced braking is initiated, is below a speed threshold at which said limit speed is exceeded despite forced braking with a maximum braking power of said braking system (107),
wherein
- said second reaction period is 10 s to 30 s, preferably 15 s to 25 s, more preferably 15 s to 20 s,
and/or
- said first reaction period is 25 s to 60 s, preferably 25 s to 35 s, more preferably 30 s to 35 s,
and/or
- said slope threshold is 20‰, preferably 30‰, more preferably 40‰.

11. Braking system according to any one of claims 9 or 10, wherein
- said control device (105) is configured in such a way that the switching from said normal mode to said steep route mode takes place before entry into a route section with a steep route, wherein said switching takes place in particular automatically and/or at a stop of said vehicle (101),
and/or
- said control device (105) is configured in such a way that, before entry into a route section with a steep route, in particular at a last stop before entry into said route section, an indication for switching from said normal mode to said steep route mode is output to said vehicle driver, wherein in particular further travel is enabled only when said indication has been acknowledged by said vehicle driver, in particular by switching from said normal mode to said steep route mode,
and/or
- said control device (105) is configured in such a way that, in the case of a last stop before entry into a route section with a steep route, further travel is enabled only when a switching from said normal mode to said steep route mode has taken place, said further travel in particular being enabled only when a successful test of the operability of said braking system (107) has taken place.

12. Braking system according to any one of claims 9 to 11, wherein
- said control device (105) is configured in such a way that, in said steep route mode, monitoring is carried out for exceeding a predeterminable maximum travel speed of said vehicle (101), and
- said control device (105) is configured in such a way that, if exceeding of said maximum travel speed of said vehicle (101) is detected, forced braking of said vehicle (101) takes place,
wherein
- said control device (105) in particular is configured in such a way that, said monitoring for exceeding said maximum travel speed is carried out in terms of signal technology independently of said driver monitoring,
and/or
- said control device (105) in particular is configured in such a way that, a presetting of said maximum travel speed is carried out before entry into a route section with a steep route, the presetting being carried out in particular automatically and/or at a stop of said vehicle (101),
and/or
- said control device (105) in particular is configured in such a way that, before entry into a route section with a steep route, in particular at a last stop before entry into said route section, an indication for presetting of said maximum travel speed is output to said vehicle driver, wherein in particular further travel is enabled only when said indication has been acknowledged by said vehicle driver, in particular by presetting of said maximum travel speed,
and/or
- said control device (105) in particular is configured in such a way that, in the case of a last stop before entry into a route section with a steep route, further travel is only enabled when a presetting of a maximum travel speed has taken place, said further travel in particular being enabled only when a successful test of the operability of said braking system (107) has taken place.

13. Braking system according to any one of claims 9 to 12, wherein
- said control device (105) is configured in such a way that, the operability of said braking system (107), in particular the operability of a dynamic braking device of said braking system (107) and/or a pneumatic braking device of said braking system (107), is monitored at least in said steep route mode, and
- said control device (105) is configured in such a way that, if a failure of a part of said braking system (107) is detected, forced braking of said vehicle (101) takes place.

14. Braking system according to any one of claims 9 to 13, wherein
- said control device (105) is configured in such a way that, in the event of forced braking of said vehicle (101), braking of said vehicle (101) to a standstill takes place,
wherein
- said control device (105) in particular is configured in such a way that, a cause for triggering said forced braking is used as trigger for switching off a traction mode of a traction device (108) of said vehicle (101),
and/or
- said control device (105) in particular is configured in such a way that, an initiated forced braking is aborted by an actuating action of said vehicle driver,
and/or
- said control device (105) in particular is configured in such a way that, after said vehicle (101) has come to a standstill, it is switched to a fixing mode in which said vehicle is secured against rolling away, in particular by a spring brake device of said braking system (107), said fixing mode being cancelled in particular only by a separate actuating action of said vehicle driver and/or in particular a standstill of said vehicle (101) being monitored and, if movement of said vehicle (101) is detected, renewed forced braking being initiated.

15. Rail vehicle with a braking system (107) according to any one of claims 9 to 14.

## Revendications

1. Procédé de commande d'un système de freinage (107) d'un véhicule ferroviaire (101), qui est actionné par un conducteur de véhicule, dans lequel
- le conducteur du véhicule est surveillé via une surveillance du conducteur, l'inactivité du conducteur du véhicule étant déterminée si aucune réaction du conducteur du véhicule n'est détectée dans une période de réaction prédéterminée après un événement de surveillance, et
- si le conducteur du véhicule est trouvé inactif, un freinage de contrainte du véhicule est exécuté ;
**caractérisé en ce que**
- la surveillance du conducteur fait une distinction entre une course sur un trajet normal et une course sur un trajet raide en basculant entre un mode trajet normal et un mode trajet raide, un trajet raide étant présent lorsqu'un seuil de pente prédéterminé pour une pente d'un trajet parcouru est dépassé,
- une première période de réaction étant spécifiée pour le trajet normal et une seconde période de réaction étant spécifiée pour le trajet raide, qui est inférieure à la première période de réaction.

2. Procédé selon la revendication 1, dans lequel
- une vitesse de fonctionnement nominale et une vitesse limite sont spécifiées pour le véhicule (101) pour au moins une section du trajet parcouru,
- la vitesse nominale de fonctionnement est une vitesse maximale à laquelle le véhicule (101) est destiné à rouler au maximum en fonctionnement normal sur la section du trajet considéré,
- la vitesse limite est une vitesse maximale à laquelle, avec une charge maximale autorisée du véhicule (101), une conduite sûre sur la section du trajet est encore garantie, et
- la seconde période de réaction est choisie de telle sorte qu'une vitesse initiale à laquelle que le véhicule (101) avec la charge maximale autorisée sera arrivée due à la pente de la section du trajet, lorsque le conducteur du véhicule est inactif et au moment où le freinage de contrainte démarre, à partir de la vitesse de fonctionnement nominale, est inférieur à un seuil de vitesse auquel, malgré un freinage d'urgence avec une puissance de freinage maximale du système de freinage (107), la vitesse limite sera dépassée.

3. Procédé selon la revendication 1 ou 2, dans lequel
- la deuxième période de réaction est de 10 s à 30 s, de préférence de 15 s à 25 s, plus préférentiellement de 15 s à 20 s,
et/ou
- la première période de réaction est de 25 s à 60 s, de préférence de 25 s à 35 s, plus préférentiellement de 30 s à 35 s,
et/ou
- le seuil de pente est de 20‰, de préférence 30‰, plus préférentiellement 40‰.

4. Procédé selon l'une des revendications précédentes, dans lequel
- le basculement du mode trajet normal au mode trajet raide s'effectue avant l'entrée d'une section à trajet raide, le basculement s'effectuant notamment automatiquement et/ou à l'arrêt du véhicule (101),
et/ou
- avant d'aborder une section à trajet raide, notamment lors d'un dernier arrêt avant l'entrée de la section à trajet raide, un message de passage du mode trajet normal au mode trajet raide est délivré au conducteur du véhicule, la poursuite de la conduite n'étant notamment libérée que si le message est confirmé par le conducteur du véhicule, notamment par passant du mode trajet normal au mode trajet raide,
et/ou
- dans le cas d'un dernier arrêt avant d'aborder une section à trajet raide, la poursuite de la course n'est libérée qu'après un passage du mode trajet normal au mode trajet raide, la poursuite de la course n'étant libérée notamment qu'après un contrôle réussi de la fonctionnalité du système de freinage (107) a eu lieu.

5. Procédé selon l'une quelconque des revendications précédentes, dans lequel
- en mode trajet raide, une surveillance est effectuée pour s'assurer qu'une vitesse de conduite maximale prédéfinie du véhicule (101) n'est pas dépassée et
- s'il est déterminé que la vitesse de conduite maximale du véhicule (101) est dépassée, le véhicule (101) est soumis à un freinage d'urgence,
dans lequel
- en particulier, la surveillance du dépassement de la vitesse maximale de conduite est effectuée indépendamment de la surveillance du conducteur.

6. Procédé selon la revendication 5, dans lequel
- la vitesse maximale de conduite est spécifiée avant d'aborder une section à trajet raide, la spécification se faisant notamment automatiquement et/ou à l'arrêt du véhicule (101),
et/ou
- avant d'aborder une section à trajet raide, notamment lors d'un dernier arrêt avant d'entrer dans la section à trajet raide, un message précisant la vitesse maximale de conduite est délivré au conducteur du véhicule, la poursuite de la conduite n'étant libérée que si le message est confirmé par le conducteur du véhicule, notamment en spécifiant la vitesse maximale de conduite,
et/ou
- dans le cas d'un dernier arrêt avant d'aborder une section à trajet raide, la poursuite de la course n'est libérée que si la vitesse de conduite maximale a été spécifiée, en particulier, la poursuite de la course n'étant libérée qu'après un test réussi de la fonctionnalité du système de freinage (107) a eu lieu.

7. Procédé selon l'une quelconque des revendications précédentes, dans lequel
- la fonctionnalité du système de freinage (107), en particulier la fonctionnalité d'un dispositif de freinage dynamique du système de freinage (107) et/ou d'un dispositif de freinage pneumatique du système de freinage (107), est surveillée au moins dans le mode trajet raide et
- si une défaillance d'une partie du système de freinage (107) est détectée, le véhicule (101) exécute un freinage de contrainte.

8. Procédé selon l'une quelconque des revendications précédentes, dans lequel
- en cas de freinage de contrainte du véhicule (101), le véhicule (101) est freiné jusqu'à l'arrêt,
dans lequel
- en particulier, une cause de déclenchement du freinage de contrainte est utilisée comme déclencheur de coupure d'un mode traction d'un dispositif de traction (108) du véhicule (101)
et/ou
- en particulier, un freinage de contrainte est interrompu par une action d'actionnement du conducteur du véhicule
et/ou
- en particulier, après l'arrêt du véhicule (101), celui-ci est commuté dans un mode de fixation, dans lequel le véhicule est protégé contre le déplacement, en particulier par un dispositif de freinage à ressort du système de freinage (107), le mode de fixation n'étant annulé, en particulier, que par une action d'actionnement séparée du conducteur du véhicule et/ou, en particulier, un arrêt du véhicule (101) est surveillé et un nouveau freinage de contrainte est déclenché si un mouvement du véhicule (101) est détecté.

9. Système de freinage pour un véhicule ferroviaire, pouvant être actionné par un conducteur de véhicule, avec un dispositif de commande (105) et un dispositif de freinage pour freiner le véhicule (101), dans lequel
- le dispositif de commande (105) est configuré pour surveiller le conducteur du véhicule est via une surveillance du conducteur, l'inactivité du conducteur du véhicule étant déterminée si aucune réaction du conducteur du véhicule n'est détectée dans une période de réaction prédéterminée après un événement de surveillance, et
- le dispositif de commande (105) est configuré pour exécuter un freinage de contrainte du véhicule si le conducteur du véhicule est trouvé inactif,
**caractérisé en ce que**
- le dispositif de commande (105) est configuré pour faire, dans la surveillance du conducteur, une distinction entre une course sur un trajet normal et une course sur un trajet raide en basculant entre un mode trajet normal et un mode trajet raide, un trajet raide étant présent lorsqu'un seuil de pente prédéterminé pour une pente d'un trajet parcouru est dépassé,
- une première période de réaction étant spécifiée pour le trajet normal et une seconde période de réaction étant spécifiée pour le trajet raide, qui est inférieure à la première période de réaction.

10. Système de freinage selon la revendication 9, dans lequel
- une vitesse de fonctionnement nominale et une vitesse limite sont spécifiées pour le véhicule (101) pour au moins une section du trajet parcouru,
- la vitesse nominale de fonctionnement est une vitesse maximale à laquelle le véhicule (101) est destiné à rouler au maximum en fonctionnement normal sur la section du trajet considéré,
- la vitesse limite est une vitesse maximale à laquelle, avec une charge maximale autorisée du véhicule (101), une conduite sûre sur la section du trajet est encore garantie, et
- la seconde période de réaction est choisie de telle sorte qu'une vitesse initiale à laquelle que le véhicule (101) avec la charge maximale autorisée sera arrivée due à la pente de la section du trajet, lorsque le conducteur du véhicule est inactif et au moment où le freinage de contrainte démarre, à partir de la vitesse de fonctionnement nominale, est inférieur à un seuil de vitesse auquel, malgré un freinage d'urgence avec une puissance de freinage maximale du système de freinage (107), la vitesse limite sera dépassée,
dans lequel
- en particulier, la deuxième période de réaction est de 10 s à 30 s, de préférence de 15 s à 25 s, plus préférentiellement de 15 s à 20 s,
et/ou
- en particulier, la première période de réaction est de 25 s à 60 s, de préférence de 25 s à 35 s, plus préférentiellement de 30 s à 35 s,
et/ou
- en particulier, le seuil de pente est de 20‰, de préférence 30‰, plus préférentiellement 40‰.

11. Système de freinage selon l'une quelconque des revendications 9 ou 10, dans lequel
- le dispositif de commande (105) est configuré de telle manière que le basculement du mode trajet normal au mode trajet raide s'effectue avant l'entrée d'une section à trajet raide, le basculement s'effectuant notamment automatiquement et/ou à l'arrêt du véhicule (101),
et/ou
- le dispositif de commande (105) est configuré de telle manière qu'avant d'aborder une section à trajet raide, notamment lors d'un dernier arrêt avant l'entrée de la section à trajet raide, un message de passage du mode trajet normal au mode trajet raide est délivré au conducteur du véhicule, la poursuite de la conduite n'étant notamment libérée que si le message est confirmé par le conducteur du véhicule, notamment par passant du mode trajet normal au mode trajet raide,
et/ou
- le dispositif de commande (105) est configuré de telle manière que dans le cas d'un dernier arrêt avant d'aborder une section à trajet raide, la poursuite de la course n'est libérée qu'après un passage du mode trajet normal au mode trajet raide, la poursuite de la course n'étant libérée notamment qu'après un contrôle réussi de la fonctionnalité du système de freinage (107) a eu lieu.

12. Système de freinage selon l'une quelconque des revendications 9 à 11, dans lequel
- le dispositif de commande (105) est configuré de telle manière que, en mode trajet raide, une surveillance est effectuée pour s'assurer qu'une vitesse de conduite maximale prédéfinie du véhicule (101) n'est pas dépassée et
- le dispositif de commande (105) est configuré de telle manière que, s'il est déterminé que la vitesse de conduite maximale du véhicule (101) est dépassée, le véhicule (101) est soumis à un freinage d'urgence,
dans lequel
- en particulier, le dispositif de commande (105) est configuré de telle manière que la surveillance du dépassement de la vitesse maximale de conduite est effectuée indépendamment de la surveillance du conducteur,
et/ou
- en particulier, le dispositif de commande (105) est configuré de telle manière que la vitesse maximale de conduite est spécifiée avant d'aborder une section à trajet raide, la spécification se faisant notamment automatiquement et/ou à l'arrêt du véhicule (101),
et/ou
- en particulier, le dispositif de commande (105) est configuré de telle manière qu'avant d'aborder une section à trajet raide, notamment lors d'un dernier arrêt avant d'entrer dans la section à trajet raide, un message précisant la vitesse maximale de conduite est délivré au conducteur du véhicule, la poursuite de la conduite n'étant libérée que si le message est confirmé par le conducteur du véhicule, notamment en spécifiant la vitesse maximale de conduite,
et/ou
- en particulier, le dispositif de commande (105) est configuré de telle manière que, dans le cas d'un dernier arrêt avant d'aborder une section à trajet raide, la poursuite de la course n'est libérée que si la vitesse de conduite maximale a été spécifiée, en particulier, la poursuite de la course n'étant libérée qu'après un test réussi de la fonctionnalité du système de freinage (107) a eu lieu.

13. Système de freinage selon l'une quelconque des revendications 9 à 12, dans lequel
- le dispositif de commande (105) est configuré de telle manière que la fonctionnalité du système de freinage (107), en particulier la fonctionnalité d'un dispositif de freinage dynamique du système de freinage (107) et/ou d'un dispositif de freinage pneumatique du système de freinage (107), est surveillée au moins dans le mode trajet raide et
- le dispositif de commande (105) est configuré de telle manière que, si une défaillance d'une partie du système de freinage (107) est détectée, le véhicule (101) exécute un freinage de contrainte.

14. Système de freinage selon l'une quelconque des revendications 9 à 13, dans lequel
- le dispositif de commande (105) est configuré de telle manière que, en cas de freinage de contrainte du véhicule (101), le véhicule (101) est freiné jusqu'à l'arrêt,
dans lequel
- en particulier, le dispositif de commande (105) est configuré de telle manière qu'une cause de déclenchement du freinage de contrainte est utilisée comme déclencheur de coupure d'un mode traction d'un dispositif de traction (108) du véhicule (101)
et/ou
- en particulier, le dispositif de commande (105) est configuré de telle manière qu'un freinage de contrainte est interrompu par une action d'actionnement du conducteur du véhicule
et/ou
- en particulier, le dispositif de commande (105) est configuré de telle manière qu'après l'arrêt du véhicule (101), celui-ci est commuté dans un mode de fixation, dans lequel le véhicule est protégé contre le déplacement, en particulier par un dispositif de freinage à ressort du système de freinage (107), le mode de fixation n'étant annulé, en particulier, que par une action d'actionnement séparée du conducteur du véhicule et/ou, en particulier, un arrêt du véhicule (101) est surveillé et un nouveau freinage de contrainte est déclenché si un mouvement du véhicule (101) est détecté.

15. Véhicule ferroviaire avec un système de freinage (107) selon l'une des revendications 9 à 14.
